# EUROPEAN PATENT SPECIFICATION

(11) **EP 4 555 644 B1**
(45) Date of publication and mention of the grant of the patent: **12.08.2026**
(21) Application number: 23744630.7
(22) Date of filing: 23.06.2023
(51) Int. Cl.: H04B 7/06, H04W 16/28

(54) **AN ENHANCED RADIATION REQUIREMENT FOR A DEVICE OPERATING AT MILLIMETER WAVE FREQUENCIES**
VERBESSERTER STRAHLUNGSBEDARF FÜR EINE VORRICHTUNG MIT MILLIMETERWELLENFREQUENZEN
EXIGENCE DE RAYONNEMENT AMÉLIORÉE POUR UN DISPOSITIF FONCTIONNANT À DES FRÉQUENCES D'ONDES MILLIMÉTRIQUES

(30) Priority: 14.07.2022 US 202217812615
(43) Date of publication of application: 21.05.2025
(60) Divisional application: 26189003.2 / 4 791 062
(73) Proprietor: Qualcomm Incorporated, San Diego, CA 92121-1714 (US)
(72) Inventor: RAGHAVAN, Vasanthan, San Diego, California 92121 (US); TASSOUDJI, Mohammad Ali, San Diego, California 92121 (US); LI, Junyi, San Diego, California 92121 (US)
(74) Representative: Jaeger, Michael David
(86) International application number: PCT/US2023/068986
(87) International publication number: WO 2024/015688

(56) References cited:
- "3rd Generation Partnership Project; Technical Specification Group Radio Access Network; General aspects for User Equipment (UE) Radio Frequency (RF) for NR (Release 15)", 3GPP STANDARD; TECHNICAL REPORT; 3GPP TR 38.817-01, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG4, no. V15.4.0, 3 July 2019 (2019-07-03), pages 1 - 94, XP051754534
- ANONYMOUS: "5G Millimeter Wave Frequencies And Mobile Networks", SKYWORKSINC, 14 June 2019 (2019-06-14), pages 1 - 203, XP055833186, Retrieved from the Internet <URL:https://www.skyworksinc.com/-/media/SkyWorks/ Documents/Articles/IWPC_062019.pdf> [retrieved on 20210819]
- RAGHAVAN VASANTHAN ET AL: "Antenna Placement and Performance Tradeoffs With Hand Blockage in Millimeter Wave Systems", IEEE TRANSACTIONS ON COMMUNICATIONS, IEEE SERVICE CENTER, PISCATAWAY, NJ. USA, vol. 67, no. 4, 1 April 2019 (2019-04-01), pages 3082 - 3096, XP011719766, ISSN: 0090-6778, [retrieved on 20190415], DOI: 10.1109/TCOMM.2019.2891669
- QUALCOMM INCORPORATED: "Impact of spherical coverage requirement to NR network performance", vol. RAN WG4, no. Melbourne, AU; 20180416 - 20180420, 24 April 2018 (2018-04-24), XP051436418, Retrieved from the Internet <URL:http://www.3gpp.org/ftp/tsg%5Fran/WG4%5FRadio/TSGR4%5F86Bis/Docs/> [retrieved on 20180424]

## Description

### FIELD OF THE DISCLOSURE

Aspects of the present disclosure generally relate to wireless communication and to techniques and apparatuses for an enhanced radiation requirement for a device operating at millimeter wave frequencies.

### BACKGROUND

Wireless communication systems are widely deployed to provide various telecommunication services such as telephony, video, data, messaging, and broadcasts. Typical wireless communication systems may employ multiple-access technologies capable of supporting communication with multiple users by sharing available system resources (e.g., bandwidth, transmit power, or the like). Examples of such multiple-access technologies include code division multiple access (CDMA) systems, time division multiple access (TDMA) systems, frequency division multiple access (FDMA) systems, orthogonal frequency division multiple access (OFDMA) systems, single-carrier frequency division multiple access (SC-FDMA) systems, time division synchronous code division multiple access (TD-SCDMA) systems, and Long Term Evolution (LTE). LTE/LTE-Advanced is a set of enhancements to the Universal Mobile Telecommunications System (UMTS) mobile standard promulgated by the Third Generation Partnership Project (3GPP).

A wireless network may include one or more network nodes that support communication for wireless communication devices, such as a user equipment (UE) or multiple UEs. A UE may communicate with a network node via downlink communications and uplink communications. "Downlink" (or "DL") refers to a communication link from the network node to the UE, and "uplink" (or "UL") refers to a communication link from the UE to the network node. Some wireless networks may support device-to-device communication, such as via a local link (e.g., a sidelink (SL), a wireless local area network (WLAN) link, and/or a wireless personal area network (WPAN) link, among other examples).

The above multiple access technologies have been adopted in various telecommunication standards to provide a common protocol that enables different UEs to communicate on a municipal, national, regional, and/or global level. New Radio (NR), which may be referred to as 5G, is a set of enhancements to the LTE mobile standard promulgated by the 3GPP. NR is designed to better support mobile broadband internet access by improving spectral efficiency, lowering costs, improving services, making use of new spectrum, and better integrating with other open standards using orthogonal frequency division multiplexing (OFDM) with a cyclic prefix (CP) (CP-OFDM) on the downlink, using CP-OFDM and/or single-carrier frequency division multiplexing (SC-FDM) (also known as discrete Fourier transform spread OFDM (DFT-s-OFDM)) on the uplink, as well as supporting beamforming, multiple-input multiple-output (MIMO) antenna technology, and carrier aggregation. As the demand for mobile broadband access continues to increase, further improvements in LTE, NR, and other radio access technologies remain useful.
3GPP TR 38.817, "General aspects for User Equipment (UE) Radio Frequency (RF for NR)", discusses the general aspects for RF, RRM, and demodulation for NR.
"5G Millimeter Wave Frequencies And Mobile Networks" discusses all the areas impacting the implementation and deployment of mmWave frequencies for mobile networks and proposes certain architectures and configuration that may help overcome some of mmWave shortcomings.

### SUMMARY

Some aspects described herein relate to an apparatus for wireless communication at a user equipment (UE). The apparatus may include a memory and one or more processors coupled to the memory. The one or more processors may be configured to transmit an uplink signal based at least in part on the uplink signal satisfying an enhanced effective isotropic radiated power (EIRP) threshold associated with a spherical coverage requirement, the enhanced EIRP threshold being based at least in part on augmenting a base operating model associated with an absence of a blockage with a signal blockage model.

Some aspects described herein relate to an apparatus for wireless communication at a UE. The apparatus may include a memory and one or more processors coupled to the memory. The one or more processors may be configured to transmit a first uplink signal based at least in part on the first uplink signal satisfying an EIRP threshold based at least in part on a first spherical coverage requirement, the first spherical coverage requirement being based at least in part on a first radiated power distribution associated with the first uplink signal satisfying the EIRP threshold at a first percentile point of a sphere centered on the UE. The one or more processors may be configured to transmit a second uplink signal based at least in part on the second uplink signal satisfying the EIRP threshold based at least in part on a second spherical coverage requirement, the second spherical coverage requirement being based at least in part on a second radiated power distribution associated with the second uplink signal satisfying the EIRP threshold at a second percentile point of the sphere.

Some aspects described herein relate to an apparatus for wireless communication at UE. The apparatus may include a memory and one or more processors coupled to the memory. The one or more processors may be configured to transmit a first uplink signal based at least in part on the first uplink signal satisfying a first EIRP threshold associated with a first spherical coverage requirement, the first spherical coverage requirement based at least in part on a first radiated power distribution associated with the first uplink signal satisfying the first EIRP threshold at a first percentile point of a sphere centered on the UE, the first percentile point associated with a base power class. The one or more processors may be configured to transmit a second uplink signal based at least in part on the second uplink signal satisfying a second EIRP threshold associated with a second spherical coverage requirement, the second spherical coverage requirement being based at least in part on a second radiated power distribution associated with the second uplink signal satisfying the second EIRP threshold is at a second percentile point with the second percentile point associated with the sphere, the second EIRP threshold being associated with an augmented power class that is a supplement to the base power class.

Some aspects described herein relate to an apparatus for wireless communication at a UE. The apparatus may include a memory and one or more processors coupled to the memory. The one or more processors may be configured to transmit an uplink signal based at least in part on the uplink signal satisfying an EIRP threshold associated with a spherical coverage requirement, the transmitting being based at least in part on using at least a minimum number of antenna components specified by a communication standard.

Some aspects described herein relate to a method of wireless communication performed by a UE. The method may include transmitting an uplink signal based at least in part on the uplink signal satisfying an enhanced EIRP threshold associated with a spherical coverage requirement, the enhanced EIRP threshold being based at least in part on augmenting a base operating model associated with an absence of a blockage with a signal blockage model.

Some aspects described herein relate to a method of wireless communication performed by a UE. The method may include transmitting a first uplink signal based at least in part on the first uplink signal satisfying an EIRP threshold based at least in part on a first spherical coverage requirement, the first spherical coverage requirement being based at least in part on a first radiated power distribution associated with the first uplink signal satisfying the EIRP threshold at a first percentile point of a sphere centered on the UE. The method may include transmitting a second uplink signal based at least in part on the second uplink signal satisfying the EIRP threshold based at least in part on a second spherical coverage requirement, the second spherical coverage requirement being based at least in part on a second radiated power distribution associated with the second uplink signal satisfying the EIRP threshold at a second percentile point of the sphere, where the first percentile point is lower than the second percentile point..

Some aspects described herein relate to a method of wireless communication performed by a UE. The method may include transmitting a first uplink signal based at least in part on the first uplink signal satisfying a first EIRP threshold associated with a first spherical coverage requirement, the first spherical coverage requirement based at least in part on a first radiated power distribution associated with the first uplink signal satisfying the first EIRP threshold at a first percentile point of a sphere centered on the UE, the first percentile point associated with a base power class. The method may include transmitting a second uplink signal based at least in part on the second uplink signal satisfying a second EIRP threshold associated with a second spherical coverage requirement, the second spherical coverage requirement being based at least in part on a second radiated power distribution associated with the second uplink signal satisfying the second EIRP threshold is at a second percentile point with the second percentile point associated with the sphere, the second EIRP threshold being associated with an augmented power class that is a supplement to the base power class.

Some aspects described herein relate to a method of wireless communication performed by a UE. The method may include transmitting an uplink signal based at least in part on the uplink signal satisfying an EIRP threshold associated with a spherical coverage requirement, the transmitting being based at least in part on using at least a minimum number of antenna components specified by a communication standard.

Some aspects described herein relate to a non-transitory computer-readable medium that stores a set of instructions for wireless communication by a UE. The set of instructions, when executed by one or more processors of the UE, may cause the UE to transmit an uplink signal based at least in part on the uplink signal satisfying an enhanced EIRP threshold associated with a spherical coverage requirement, the enhanced EIRP threshold being based at least in part on augmenting a base operating model associated with an absence of a blockage with a signal blockage model.

Some aspects described herein relate to a non-transitory computer-readable medium that stores a set of instructions for wireless communication at a UE. The set of instructions, when executed by one or more processors of the UE, may cause the UE to transmit a first uplink signal based at least in part on the first uplink signal satisfying an EIRP threshold based at least in part on a first spherical coverage requirement, the first spherical coverage requirement being based at least in part on a first radiated power distribution associated with the first uplink signal satisfying the EIRP threshold at a first percentile point of a sphere centered on the UE. The set of instructions, when executed by one or more processors of the UE, may cause the UE to transmit a second uplink signal based at least in part on the second uplink signal satisfying the EIRP threshold based at least in part on a second spherical coverage requirement, the second spherical coverage requirement being based at least in part on a second radiated power distribution associated with the second uplink signal satisfying the EIRP threshold at a second percentile point of the sphere.

Some aspects described herein relate to a non-transitory computer-readable medium that stores a set of instructions for wireless communication by a UE. The set of instructions, when executed by one or more processors of the UE, may cause the UE to transmit a first uplink signal based at least in part on the first uplink signal satisfying a first EIRP threshold associated with a first spherical coverage requirement, the first spherical coverage requirement based at least in part on a first radiated power distribution associated with the first uplink signal satisfying the first EIRP threshold at a first percentile point of a sphere centered on the UE, the first percentile point associated with a base power class. The set of instructions, when executed by one or more processors of the UE, may cause the UE to transmit a second uplink signal based at least in part on the second uplink signal satisfying a second EIRP threshold associated with a second spherical coverage requirement, the second spherical coverage requirement being based at least in part on a second radiated power distribution associated with the second uplink signal satisfying the second EIRP threshold is at a second percentile point with the second percentile point associated with the sphere, the second EIRP threshold being associated with an augmented power class that is a supplement to the base power class.

Some aspects described herein relate to a non-transitory computer-readable medium that stores a set of instructions for wireless communication by a UE. The set of instructions, when executed by one or more processors of the UE, may cause the UE to transmit an uplink signal based at least in part on the uplink signal satisfying an EIRP threshold associated with a spherical coverage requirement, the transmitting being based at least in part on using at least a minimum number of antenna components specified by a communication standard.

Some aspects described herein relate to an apparatus for wireless communication. The apparatus may include means for transmitting an uplink signal based at least in part on the uplink signal satisfying an enhanced EIRP threshold associated with a spherical coverage requirement, the enhanced EIRP threshold being based at least in part on augmenting a base operating model associated with an absence of a blockage with a signal blockage model.

Some aspects described herein relate to an apparatus for wireless communication. The apparatus may include means for transmitting a first uplink signal based at least in part on the first uplink signal satisfying an EIRP threshold based at least in part on a first spherical coverage requirement, the first spherical coverage requirement being based at least in part on a first radiated power distribution associated with the first uplink signal satisfying the EIRP threshold at a first percentile point of a sphere centered on the UE. The apparatus may include means for transmitting a second uplink signal based at least in part on the second uplink signal satisfying the EIRP threshold based at least in part on a second spherical coverage requirement, the second spherical coverage requirement being based at least in part on a second radiated power distribution associated with the second uplink signal satisfying the EIRP threshold at a second percentile point of the sphere, where the first percentile point is lower than the second percentile point.

Some aspects described herein relate to an apparatus for wireless communication. The apparatus may include means for transmitting a first uplink signal based at least in part on the first uplink signal satisfying a first EIRP threshold associated with a first spherical coverage requirement, the first spherical coverage requirement based at least in part on a first radiated power distribution associated with the first uplink signal satisfying the first EIRP threshold at a first percentile point of a sphere centered on the UE, the first percentile point associated with a base power class. The apparatus may include means for transmitting a second uplink signal based at least in part on the second uplink signal satisfying a second EIRP threshold associated with a second spherical coverage requirement, the second spherical coverage requirement being based at least in part on a second radiated power distribution associated with the second uplink signal satisfying the second EIRP threshold is at a second percentile point with the second percentile point associated with the sphere, the second EIRP threshold being associated with an augmented power class that is a supplement to the base power class.

Some aspects described herein relate to an apparatus for wireless communication. The apparatus may include means for transmitting an uplink signal based at least in part on the uplink signal satisfying an EIRP threshold associated with a spherical coverage requirement, the transmitting being based at least in part on using at least a minimum number of antenna components specified by a communication standard.

Aspects generally include a method, apparatus, system, computer program product, non-transitory computer-readable medium, user equipment, base station, network entity, network node, wireless communication device, and/or processing system as substantially described herein with reference to and as illustrated by the drawings and specification.

The foregoing has outlined rather broadly the features and technical advantages of examples according to the disclosure in order that the detailed description that follows may be better understood. Additional features and advantages will be described hereinafter. The conception and specific examples disclosed may be readily utilized as a basis for modifying or designing other structures for carrying out the same purposes of the present disclosure.

Characteristics of the concepts disclosed herein, both their organization and method of operation, together with associated advantages, will be better understood from the following description when considered in connection with the accompanying figures. Each of the figures is provided for the purposes of illustration and description, and not as a definition of the limits of the claims.

While aspects are described in the present disclosure by illustration to some examples, those skilled in the art will understand that such aspects may be implemented in many different arrangements and scenarios. Techniques described herein may be implemented using different platform types, devices, systems, shapes, sizes, and/or packaging arrangements. For example, some aspects may be implemented via integrated chip embodiments or other non-module-component based devices (e.g., end-user devices, vehicles, communication devices, computing devices, industrial equipment, retail/purchasing devices, medical devices, and/or artificial intelligence devices). Aspects may be implemented in chip-level components, modular components, non-modular components, non-chip-level components, device-level components, and/or system-level components. Devices incorporating described aspects and features may include additional components and features for implementation and practice of claimed and described aspects. For example, transmission and reception of wireless signals may include one or more components for analog and digital purposes (e.g., hardware components including antennas, radio frequency (RF) chains, power amplifiers, modulators, buffers, processors, interleavers, adders, and/or summers). It is intended that aspects described herein may be practiced in a wide variety of devices, components, systems, distributed arrangements, and/or end-user devices of varying size, shape, and constitution.

### BRIEF DESCRIPTION OF THE DRAWINGS

So that the above-recited features of the present disclosure can be understood in detail, a more particular description, briefly summarized above, may be had by reference to aspects, some of which are illustrated in the appended drawings. It is to be noted, however, that the appended drawings illustrate only certain typical aspects of this disclosure and are therefore not to be considered limiting of its scope, for the description may admit to other equally effective aspects. The same reference numbers in different drawings may identify the same or similar elements.
Fig. 1 is a diagram illustrating an example of a wireless network, in accordance with the present disclosure.
Fig. 2 is a diagram illustrating an example of a network node in communication with a user equipment (UE) in a wireless network, in accordance with the present disclosure.
Fig. 3 is a diagram illustrating an example of one or more metrics specified by a communication standard, in accordance with the present disclosure.
Fig. 4 is a diagram illustrating an example of a wireless communication process between a UE and a computing device, in accordance with the present disclosure.
Fig. 5 is a diagram illustrating an example process performed, for example, by a UE, in accordance with the present disclosure.
Fig. 6 is a diagram illustrating an example process performed, for example, by a UE, in accordance with the present disclosure.
Fig. 7 is a diagram illustrating an example process performed, for example, by a UE, in accordance with the present disclosure.
Fig. 8 is a diagram illustrating an example process performed, for example, by a UE, in accordance with the present disclosure.
Fig. 9 is a diagram of an example apparatus for wireless communication, in accordance with the present disclosure.

### DETAILED DESCRIPTION

Various aspects of the disclosure are described more fully hereinafter with reference to the accompanying drawings. This disclosure may, however, be embodied in many different forms and should not be construed as limited to any specific structure or function presented throughout this disclosure. Rather, these aspects are provided so that this disclosure will be thorough and complete, and will fully convey the scope of the disclosure to those skilled in the art. One skilled in the art should appreciate that the scope of the disclosure is intended to cover any aspect of the disclosure disclosed herein, whether implemented independently of or combined with any other aspect of the disclosure. For example, an apparatus may be implemented or a method may be practiced using any number of the aspects set forth herein. In addition, the scope of the disclosure is intended to cover such an apparatus or method which is practiced using other structure, functionality, or structure and functionality in addition to or other than the various aspects of the disclosure set forth herein. It should be understood that any aspect of the disclosure disclosed herein may be embodied by one or more elements of a claim.

Several aspects of telecommunication systems will now be presented with reference to various apparatuses and techniques. These apparatuses and techniques will be described in the following detailed description and illustrated in the accompanying drawings by various blocks, modules, components, circuits, steps, processes, algorithms, or the like (collectively referred to as "elements"). These elements may be implemented using hardware, software, or combinations thereof. Whether such elements are implemented as hardware or software depends upon the particular application and design constraints imposed on the overall system.

While aspects may be described herein using terminology commonly associated with a 5G or New Radio (NR) radio access technology (RAT), aspects of the present disclosure can be applied to other RATs, such as a 3G RAT, a 4G RAT, and/or a RAT subsequent to 5G (e.g., 6G).

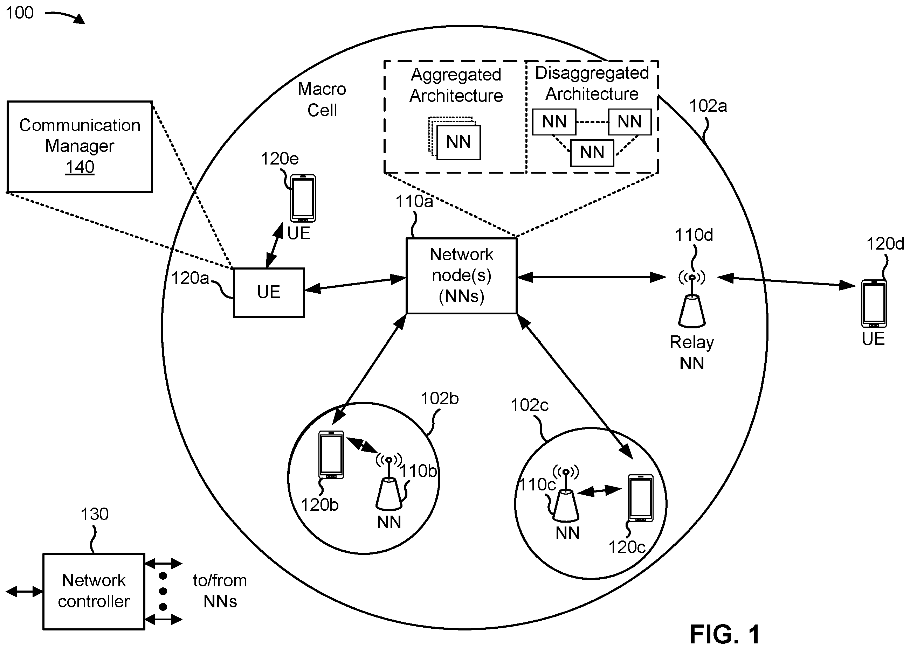

Fig. 1 is a diagram illustrating an example of a wireless network 100, in accordance with the present disclosure. The wireless network 100 may be or may include elements of a 5G (e.g., NR) network and/or a 4G (e.g., Long Term Evolution (LTE)) network, among other examples. The wireless network 100 may include one or more network nodes 110 (shown as a network node 110a, a network node 110b, a network node 110c, and a network node 110d), a user equipment (UE) 120 or multiple UEs 120 (shown as a UE 120a, a UE 120b, a UE 120c, a UE 120d, and a UE 120e), and/or other entities. A network node 110 is a network node that communicates with UEs 120. As shown, a network node 110 may include one or more network nodes. For example, a network node 110 may be an aggregated network node, meaning that the aggregated network node is configured to utilize a radio protocol stack that is physically or logically integrated within a single radio access network (RAN) node (e.g., within a single device or unit). As another example, a network node 110 may be a disaggregated network node (sometimes referred to as a disaggregated base station), meaning that the network node 110 is configured to utilize a protocol stack that is physically or logically distributed among two or more nodes (such as one or more central units (CUs), one or more distributed units (DUs), or one or more radio units (RUs)).

In some examples, a network node 110 is or includes a network node that communicates with UEs 120 via a radio access link, such as an RU. In some examples, a network node 110 is or includes a network node that communicates with other network nodes 110 via a fronthaul link or a midhaul link, such as a DU. In some examples, a network node 110 is or includes a network node that communicates with other network nodes 110 via a midhaul link or a core network via a backhaul link, such as a CU. In some examples, a network node 110 (such as an aggregated network node 110 or a disaggregated network node 110) may include multiple network nodes, such as one or more RUs, one or more CUs, and/or one or more DUs. A network node 110 may include, for example, an NR base station, an LTE base station, a Node B, an eNB (e.g., in 4G), a gNB (e.g., in 5G), an access point, a transmission reception point (TRP), a DU, an RU, a CU, a mobility element of a network, a core network node, a network element, a network equipment, a RAN node, or a combination thereof. In some examples, the network nodes 110 may be interconnected to one another or to one or more other network nodes 110 in the wireless network 100 through various types of fronthaul, midhaul, and/or backhaul interfaces, such as a direct physical connection, an air interface, or a virtual network, using any suitable transport network.

In some examples, a network node 110 may provide communication coverage for a particular geographic area. In the Third Generation Partnership Project (3GPP), the term "cell" can refer to a coverage area of a network node 110 and/or a network node subsystem serving this coverage area, depending on the context in which the term is used. A network node 110 may provide communication coverage for a macro cell, a pico cell, a femto cell, and/or another type of cell. A macro cell may cover a relatively large geographic area (e.g., several kilometers in radius) and may allow unrestricted access by UEs 120 with service subscriptions. A pico cell may cover a relatively small geographic area and may allow unrestricted access by UEs 120 with service subscriptions. A femto cell may cover a relatively small geographic area (e.g., a home) and may allow restricted access by UEs 120 having association with the femto cell (e.g., UEs 120 in a closed subscriber group (CSG)). A network node 110 for a macro cell may be referred to as a macro network node. A network node 110 for a pico cell may be referred to as a pico network node. A network node 110 for a femto cell may be referred to as a femto network node or an in-home network node. In the example shown in Fig. 1, the network node 110a may be a macro network node for a macro cell 102a, the network node 110b may be a pico network node for a pico cell 102b, and the network node 110c may be a femto network node for a femto cell 102c. A network node may support one or multiple (e.g., three) cells. In some examples, a cell may not necessarily be stationary, and the geographic area of the cell may move according to the location of a network node 110 that is mobile (e.g., a mobile network node).

In some aspects, the term "base station" or "network node" may refer to an aggregated base station, a disaggregated base station, an integrated access and backhaul (IAB) node, a relay node, or one or more components thereof. For example, in some aspects, "base station" or "network node" may refer to a CU, a DU, an RU, a Near-Real Time (Near-RT) RAN Intelligent Controller (RIC), or a Non-Real Time (Non-RT) RIC, or a combination thereof. In some aspects, the term "base station" or "network node" may refer to one device configured to perform one or more functions, such as those described herein in connection with the network node 110. In some aspects, the term "base station" or "network node" may refer to a plurality of devices configured to perform the one or more functions. For example, in some distributed systems, each of a quantity of different devices (which may be located in the same geographic location or in different geographic locations) may be configured to perform at least a portion of a function, or to duplicate performance of at least a portion of the function, and the term "base station" or "network node" may refer to any one or more of those different devices. In some aspects, the term "base station" or "network node" may refer to one or more virtual base stations or one or more virtual base station functions. For example, in some aspects, two or more base station functions may be instantiated on a single device. In some aspects, the term "base station" or "network node" may refer to one of the base station functions and not another. In this way, a single device may include more than one base station.

The wireless network 100 may include one or more relay stations. A relay station is a network node that can receive a transmission of data from an upstream node (e.g., a network node 110 or a UE 120) and send a transmission of the data to a downstream node (e.g., a UE 120 or a network node 110). A relay station may be a UE 120 that can relay transmissions for other UEs 120. In the example shown in Fig. 1, the network node 110d (e.g., a relay network node) may communicate with the network node 110a (e.g., a macro network node) and the UE 120d in order to facilitate communication between the network node 110a and the UE 120d. A network node 110 that relays communications may be referred to as a relay station, a relay base station, a relay network node, a relay node, a relay, or the like.

The wireless network 100 may be a heterogeneous network that includes network nodes 110 of different types, such as macro network nodes, pico network nodes, femto network nodes, relay network nodes, or the like. These different types of network nodes 110 may have different transmit power levels, different coverage areas, and/or different impacts on interference in the wireless network 100. For example, macro network nodes may have a high transmit power level (e.g., 5 to 40 watts) whereas pico network nodes, femto network nodes, and relay network nodes may have lower transmit power levels (e.g., 0.1 to 2 watts).

A network controller 130 may couple to or communicate with a set of network nodes 110 and may provide coordination and control for these network nodes 110. The network controller 130 may communicate with the network nodes 110 via a backhaul communication link or a midhaul communication link. The network nodes 110 may communicate with one another directly or indirectly via a wireless or wireline backhaul communication link. In some aspects, the network controller 130 may be a CU or a core network device, or may include a CU or a core network device.

The UEs 120 may be dispersed throughout the wireless network 100, and each UE 120 may be stationary or mobile. A UE 120 may include, for example, an access terminal, a terminal, a mobile station, and/or a subscriber unit. A UE 120 may be a cellular phone (e.g., a smart phone), a personal digital assistant (PDA), a wireless modem, a wireless communication device, a handheld device, a laptop computer, a cordless phone, a wireless local loop (WLL) station, a tablet, a camera, a gaming device, a netbook, a smartbook, an ultrabook, a medical device, a biometric device, a wearable device (e.g., a smart watch, smart clothing, smart glasses, a smart wristband, smart jewelry (e.g., a smart ring or a smart bracelet)), an entertainment device (e.g., a music device, a video device, and/or a satellite radio), a vehicular component or sensor, a smart meter/sensor, industrial manufacturing equipment, a global positioning system device, a UE function of a network node, and/or any other suitable device that is configured to communicate via a wireless or wired medium.

Some UEs 120 may be considered machine-type communication (MTC) or evolved or enhanced machine-type communication (eMTC) UEs. An MTC UE and/or an eMTC UE may include, for example, a robot, a drone, a remote device, a sensor, a meter, a monitor, and/or a location tag, that may communicate with a network node, another device (e.g., a remote device), or some other entity. Some UEs 120 may be considered Internet-of-Things (IoT) devices, and/or may be implemented as NB-IoT (narrowband IoT) devices. Some UEs 120 may be considered a Customer Premises Equipment. A UE 120 may be included inside a housing that houses components of the UE 120, such as processor components and/or memory components. In some examples, the processor components and the memory components may be coupled together. For example, the processor components (e.g., one or more processors) and the memory components (e.g., a memory) may be operatively coupled, communicatively coupled, electronically coupled, and/or electrically coupled.

In general, any number of wireless networks 100 may be deployed in a given geographic area. Each wireless network 100 may support a particular RAT and may operate on one or more frequencies. A RAT may be referred to as a radio technology, an air interface, or the like. A frequency may be referred to as a carrier, a frequency channel, or the like. Each frequency may support a single RAT in a given geographic area in order to avoid interference between wireless networks of different RATs. In some cases, NR or 5G RAT networks may be deployed.

In some examples, two or more UEs 120 (e.g., shown as UE 120a and UE 120e) may communicate directly using one or more sidelink channels (e.g., without using a network node 110 as an intermediary to communicate with one another). For example, the UEs 120 may communicate using peer-to-peer (P2P) communications, device-to-device (D2D) communications, a vehicle-to-everything (V2X) protocol (e.g., which may include a vehicle-to-vehicle (V2V) protocol, a vehicle-to-infrastructure (V2I) protocol, or a vehicle-to-pedestrian (V2P) protocol), and/or a mesh network. In such examples, a UE 120 may perform scheduling operations, resource selection operations, and/or other operations described elsewhere herein as being performed by the network node 110.

Devices of the wireless network 100 may communicate using the electromagnetic spectrum, which may be subdivided by frequency or wavelength into various classes, bands, channels, or the like. For example, devices of the wireless network 100 may communicate using one or more operating bands. In 5G NR, two initial operating bands have been identified as frequency range designations FR1 (410 MHz - 7.125 GHz) and FR2 (24.25 GHz - 52.6 GHz). It should be understood that although a portion of FR1 is greater than 6 GHz, FR1 is often referred to (interchangeably) as a "Sub-6 GHz" band in various documents and articles. A similar nomenclature issue sometimes occurs with regard to FR2, which is often referred to (interchangeably) as a "millimeter wave" band in documents and articles, despite being different from the extremely high frequency (EHF) band (30 GHz - 300 GHz) which is identified by the International Telecommunications Union (ITU) as a "millimeter wave" band.

The frequencies between FR1 and FR2 are often referred to as mid-band frequencies. Recent 5G NR studies have identified an operating band for these mid-band frequencies as frequency range designation FR3 (7.125 GHz - 24.25 GHz). Frequency bands falling within FR3 may inherit FR1 characteristics and/or FR2 characteristics, and thus may effectively extend features of FR1 and/or FR2 into mid-band frequencies. In addition, higher frequency bands are currently being explored to extend 5G NR operation beyond 52.6 GHz. For example, three higher operating bands have been identified as frequency range designations FR4a or FR4-1 (52.6 GHz - 71 GHz), FR4 (52.6 GHz - 114.25 GHz), and FR5 (114.25 GHz - 300 GHz). Each of these higher frequency bands falls within the EHF band.

With the above examples in mind, unless specifically stated otherwise, it should be understood that the term "sub-6 GHz" or the like, if used herein, may broadly represent frequencies that may be less than 6 GHz, may be within FR1, or may include mid-band frequencies. Further, unless specifically stated otherwise, it should be understood that the term "millimeter wave" or the like, if used herein, may broadly represent frequencies that may include mid-band frequencies, may be within FR2, FR4, FR4-a or FR4-1, and/or FR5, or may be within the EHF band. It is contemplated that the frequencies included in these operating bands (e.g., FR1, FR2, FR3, FR4, FR4-a, FR4-1, and/or FR5) may be modified, and techniques described herein are applicable to those modified frequency ranges.

Deployment of communication systems, such as 5G NR systems, may be arranged in multiple manners with various components or constituent parts. In a 5G NR system, or network, a network node, a network entity, a mobility element of a network, a RAN node, a core network node, a network element, a base station, or a network equipment may be implemented in an aggregated or disaggregated architecture. For example, a base station (such as a Node B (NB), an evolved NB (eNB), an NR BS, a 5G NB, an access point (AP), a TRP, or a cell, among other examples), or one or more units (or one or more components) performing base station functionality, may be implemented as an aggregated base station (also known as a standalone base station or a monolithic base station) or a disaggregated base station. "Network entity" or "network node" may refer to a disaggregated base station, or to one or more units of a disaggregated base station (such as one or more CUs, one or more DUs, one or more RUs, or a combination thereof).

An aggregated base station (e.g., an aggregated network node) may be configured to utilize a radio protocol stack that is physically or logically integrated within a single RAN node (e.g., within a single device or unit). A disaggregated base station (e.g., a disaggregated network node) may be configured to utilize a protocol stack that is physically or logically distributed among two or more units (such as one or more CUs, one or more DUs, or one or more RUs). In some examples, a CU may be implemented within a network node, and one or more DUs may be co-located with the CU, or alternatively, may be geographically or virtually distributed throughout one or multiple other network nodes. The DUs may be implemented to communicate with one or more RUs. Each of the CU, DU and RU also can be implemented as virtual units, such as a virtual central unit (VCU), a virtual distributed unit (VDU), or a virtual radio unit (VRU), among other examples.

Base station-type operation or network design may consider aggregation characteristics of base station functionality. For example, disaggregated base stations may be utilized in an IAB network, an open radio access network (O-RAN (such as the network configuration sponsored by the O-RAN Alliance)), or a virtualized radio access network (vRAN, also known as a cloud radio access network (C-RAN)) to facilitate scaling of communication systems by separating base station functionality into one or more units that can be individually deployed. A disaggregated base station may include functionality implemented across two or more units at various physical locations, as well as functionality implemented for at least one unit virtually, which can enable flexibility in network design. The various units of the disaggregated base station can be configured for wired or wireless communication with at least one other unit of the disaggregated base station.

In some aspects, the UE 120 may include a communication manager 140. As described in more detail elsewhere herein, the communication manager 140 may transmit an uplink signal based at least in part on the uplink signal satisfying an enhanced EIRP threshold associated with a spherical coverage requirement, the enhanced EIRP threshold being based at least in part on augmenting a base operating model associated with an absence of a blockage with a signal blockage model. Additionally, or alternatively, the communication manager 140 may perform one or more other operations described herein.

In some aspects, the communication manager 140 may transmit a first uplink signal based at least in part on the first uplink signal satisfying an EIRP threshold based at least in part on a first spherical coverage requirement, the first spherical coverage requirement being based at least in part on a first radiated power distribution associated with the first uplink signal satisfying the EIRP threshold at a first percentile point of a sphere centered on the UE; and transmit a second uplink signal based at least in part on the second uplink signal satisfying the EIRP threshold based at least in part on a second spherical coverage requirement, the second spherical coverage requirement being based at least in part on a second radiated power distribution associated with the second uplink signal satisfying the EIRP threshold at a second percentile point of the sphere, wherein the first percentile point is lower than the second percentile point. Additionally, or alternatively, the communication manager 140 may perform one or more other operations described herein.

In some aspects, the communication manager 140 may transmit a first uplink signal based at least in part on the first uplink signal satisfying a first EIRP threshold associated with a first spherical coverage requirement, the first spherical coverage requirement based at least in part on a first radiated power distribution associated with the first uplink signal satisfying the first EIRP threshold at a first percentile point of a sphere centered on the UE, the first percentile point associated with a base power class; and transmit a second uplink signal based at least in part on the second uplink signal satisfying a second EIRP threshold associated with a second spherical coverage requirement, the second spherical coverage requirement being based at least in part on a second radiated power distribution associated with the second uplink signal satisfying the second EIRP threshold is at a second percentile point with the second percentile point associated with the sphere, the second EIRP threshold being associated with an augmented power class that is a supplement to the base power class. Additionally, or alternatively, the communication manager 140 may perform one or more other operations described herein.

In some aspects, the communication manager 140 may transmit an uplink signal based at least in part on the uplink signal satisfying an EIRP threshold associated with a spherical coverage requirement, the transmitting being based at least in part on using at least a minimum number of antenna modules specified by a communication standard. Additionally, or alternatively, the communication manager 140 may perform one or more other operations described herein.

As indicated above, Fig. 1 is provided as an example. Other examples may differ from what is described with regard to Fig. 1.

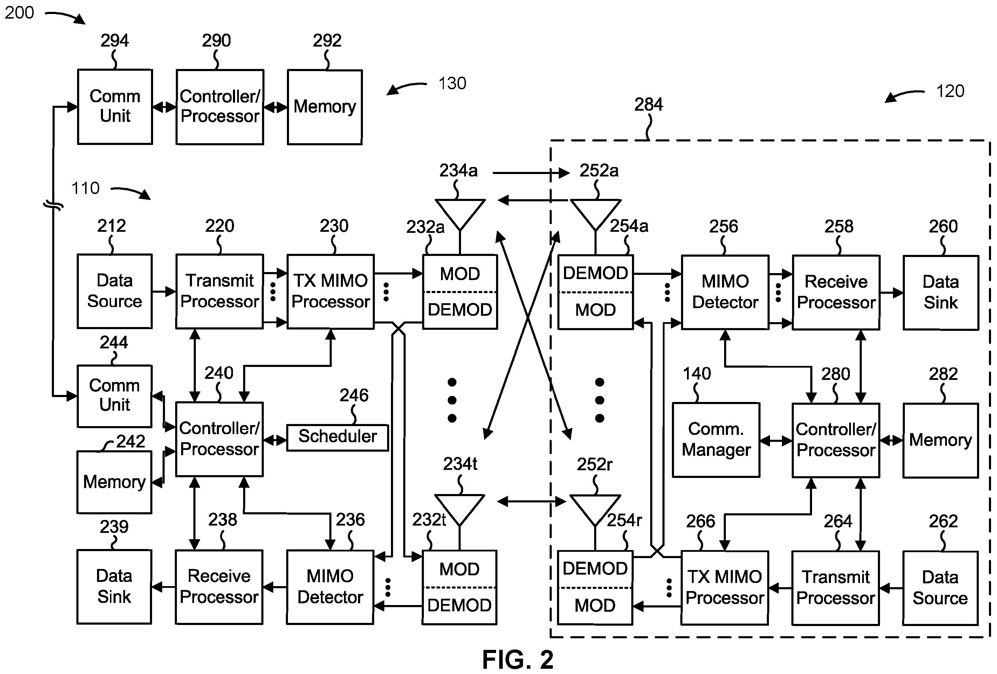

Fig. 2 is a diagram illustrating an example 200 of a network node 110 in communication with a UE 120 in a wireless network 100, in accordance with the present disclosure. The network node 110 may be equipped with a set of antennas 234a through 234t, such as *T* antennas (*T* ≥ 1). The UE 120 may be equipped with a set of antennas 252a through 252r, such as *R* antennas (*R* ≥ 1). The network node 110 of example 200 includes one or more radio frequency components, such as antennas 234 and a modem 254. In some examples, a network node 110 may include an interface, a communication component, or another component that facilitates communication with the UE 120 or another network node. Some network nodes 110 may not include radio frequency components that facilitate direct communication with the UE 120, such as one or more CUs, or one or more DUs.

At the network node 110, a transmit processor 220 may receive data, from a data source 212, intended for the UE 120 (or a set of UEs 120). The transmit processor 220 may select one or more modulation and coding schemes (MCSs) for the UE 120 based at least in part on one or more channel quality indicators (CQIs) received from that UE 120. The network node 110 may process (e.g., encode and modulate) the data for the UE 120 based at least in part on the MCS(s) selected for the UE 120 and may provide data symbols for the UE 120. The transmit processor 220 may process system information (e.g., for semi-static resource partitioning information (SRPI)) and control information (e.g., CQI requests, grants, and/or upper layer signaling) and provide overhead symbols and control symbols. The transmit processor 220 may generate reference symbols for reference signals (e.g., a cell-specific reference signal (CRS) or a demodulation reference signal (DMRS)) and synchronization signals (e.g., a primary synchronization signal (PSS) or a secondary synchronization signal (SSS)). A transmit (TX) multiple-input multiple-output (MIMO) processor 230 may perform spatial processing (e.g., precoding) on the data symbols, the control symbols, the overhead symbols, and/or the reference symbols, if applicable, and may provide a set of output symbol streams (e.g., *T* output symbol streams) to a corresponding set of modems 232 (e.g., *T* modems), shown as modems 232a through 232t. For example, each output symbol stream may be provided to a modulator component (shown as MOD) of a modem 232. Each modem 232 may use a respective modulator component to process a respective output symbol stream (e.g., for OFDM) to obtain an output sample stream. Each modem 232 may further use a respective modulator component to process (e.g., convert to analog, amplify, filter, and/or upconvert) the output sample stream to obtain a downlink signal. The modems 232a through 232t may transmit a set of downlink signals (e.g., *T* downlink signals) via a corresponding set of antennas 234 (e.g., *T* antennas), shown as antennas 234a through 234t.

At the UE 120, a set of antennas 252 (shown as antennas 252a through 252r) may receive the downlink signals from the network node 110 and/or other network nodes 110 and may provide a set of received signals (e.g., *R* received signals) to a set of modems 254 (e.g., *R* modems), shown as modems 254a through 254r. For example, each received signal may be provided to a demodulator component (shown as DEMOD) of a modem 254. Each modem 254 may use a respective demodulator component to condition (e.g., filter, amplify, downconvert, and/or digitize) a received signal to obtain input samples. Each modem 254 may use a demodulator component to further process the input samples (e.g., for OFDM) to obtain received symbols. A MIMO detector 256 may obtain received symbols from the modems 254, may perform MIMO detection on the received symbols if applicable, and may provide detected symbols. A receive processor 258 may process (e.g., demodulate and decode) the detected symbols, may provide decoded data for the UE 120 to a data sink 260, and may provide decoded control information and system information to a controller/processor 280. The term "controller/processor" may refer to one or more controllers, one or more processors, or a combination thereof. A channel processor may determine a reference signal received power (RSRP) parameter, a received signal strength indicator (RSSI) parameter, a reference signal received quality (RSRQ) parameter, and/or a CQI parameter, among other examples. In some examples, one or more components of the UE 120 may be included in a housing 284.

The network controller 130 may include a communication unit 294, a controller/processor 290, and a memory 292. The network controller 130 may include, for example, one or more devices in a core network. The network controller 130 may communicate with the network node 110 via the communication unit 294.

One or more antennas (e.g., antennas 234a through 234t and/or antennas 252a through 252r) may include, or may be included within, one or more antenna panels, one or more antenna groups, one or more sets of antenna elements, and/or one or more antenna arrays, among other examples. An antenna panel, an antenna group, a set of antenna elements, and/or an antenna array may include one or more antenna elements (within a single housing or multiple housings), a set of coplanar antenna elements, a set of non-coplanar antenna elements, and/or one or more antenna elements coupled to one or more transmission and/or reception components, such as one or more components of Fig. 2.

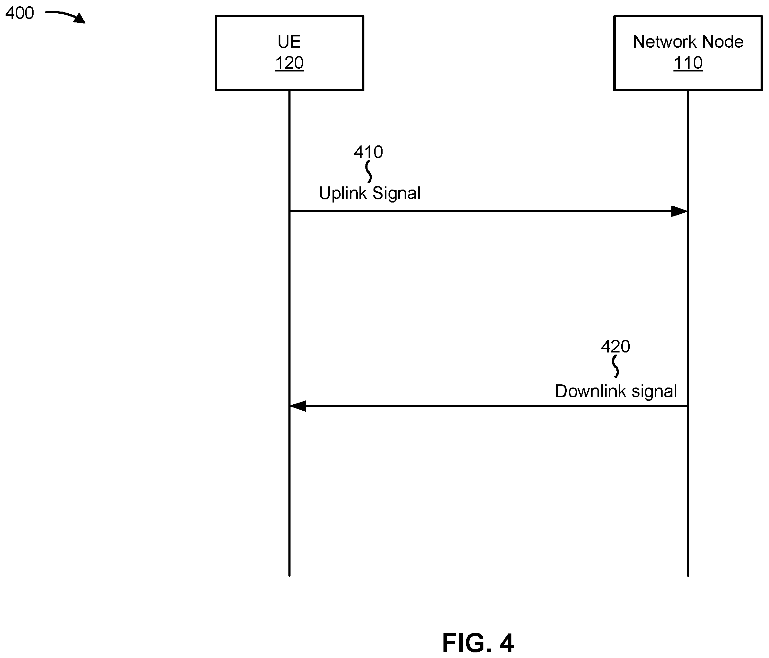

On the uplink, at the UE 120, a transmit processor 264 may receive and process data from a data source 262 and control information (e.g., for reports that include RSRP, RSSI, RSRQ, and/or CQI) from the controller/processor 280. The transmit processor 264 may generate reference symbols for one or more reference signals. The symbols from the transmit processor 264 may be precoded by a TX MIMO processor 266 if applicable, further processed by the modems 254 (e.g., for DFT-s-OFDM or CP-OFDM), and transmitted to the network node 110. In some examples, the modem 254 of the UE 120 may include a modulator and a demodulator. In some examples, the UE 120 includes a transceiver. The transceiver may include any combination of the antenna(s) 252, the modem(s) 254, the MIMO detector 256, the receive processor 258, the transmit processor 264, and/or the TX MIMO processor 266. The transceiver may be used by a processor (e.g., the controller/processor 280) and the memory 282 to perform aspects of any of the methods described herein (e.g., with reference to Figs. 4-9).

At the network node 110, the uplink signals from UE 120 and/or other UEs may be received by the antennas 234, processed by the modem 232 (e.g., a demodulator component, shown as DEMOD, of the modem 232), detected by a MIMO detector 236 if applicable, and further processed by a receive processor 238 to obtain decoded data and control information sent by the UE 120. The receive processor 238 may provide the decoded data to a data sink 239 and provide the decoded control information to the controller/processor 240. The network node 110 may include a communication unit 244 and may communicate with the network controller 130 via the communication unit 244. The network node 110 may include a scheduler 246 to schedule one or more UEs 120 for downlink and/or uplink communications. In some examples, the modem 232 of the network node 110 may include a modulator and a demodulator. In some examples, the network node 110 includes a transceiver. The transceiver may include any combination of the antenna(s) 234, the modem(s) 232, the MIMO detector 236, the receive processor 238, the transmit processor 220, and/or the TX MIMO processor 230. The transceiver may be used by a processor (e.g., the controller/processor 240) and the memory 242 to perform aspects of any of the methods described herein (e.g., with reference to Figs. 4-9).

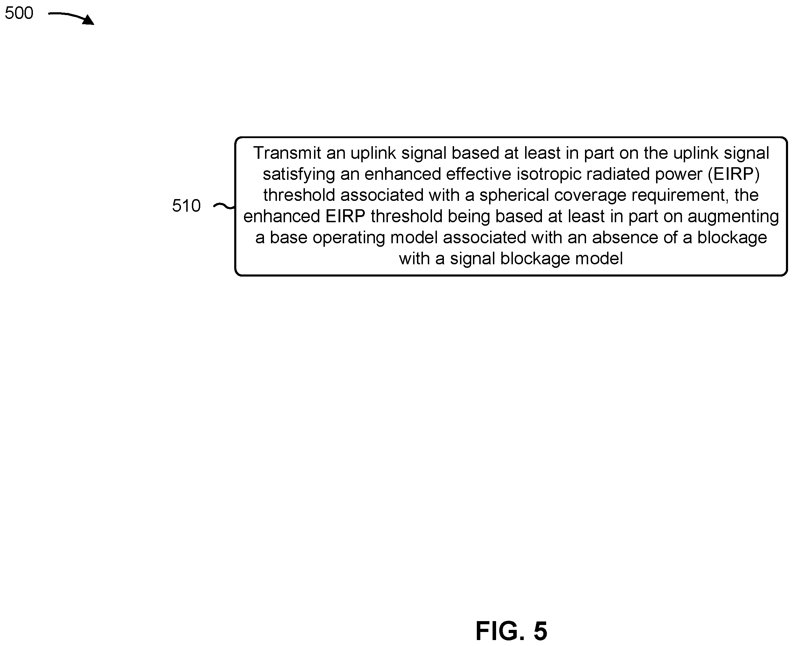

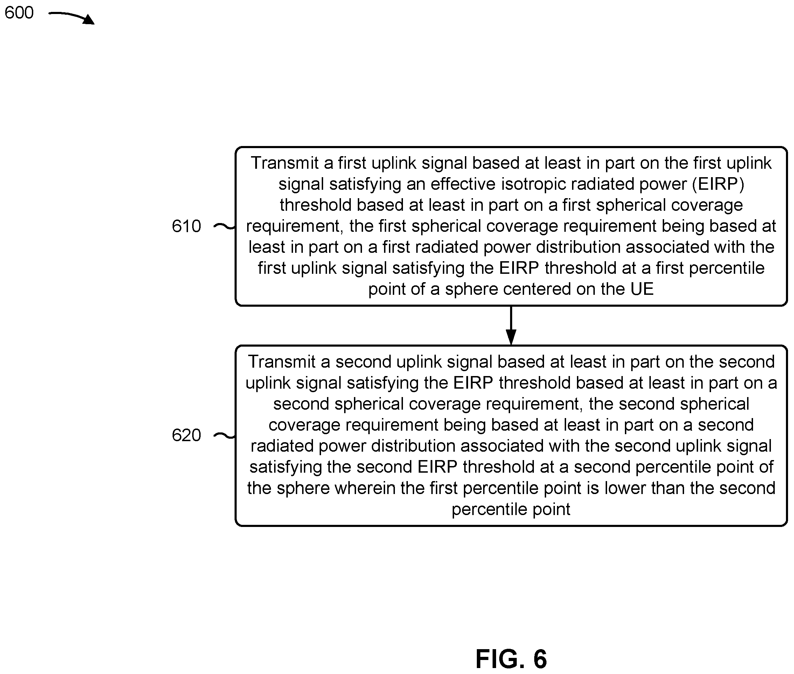

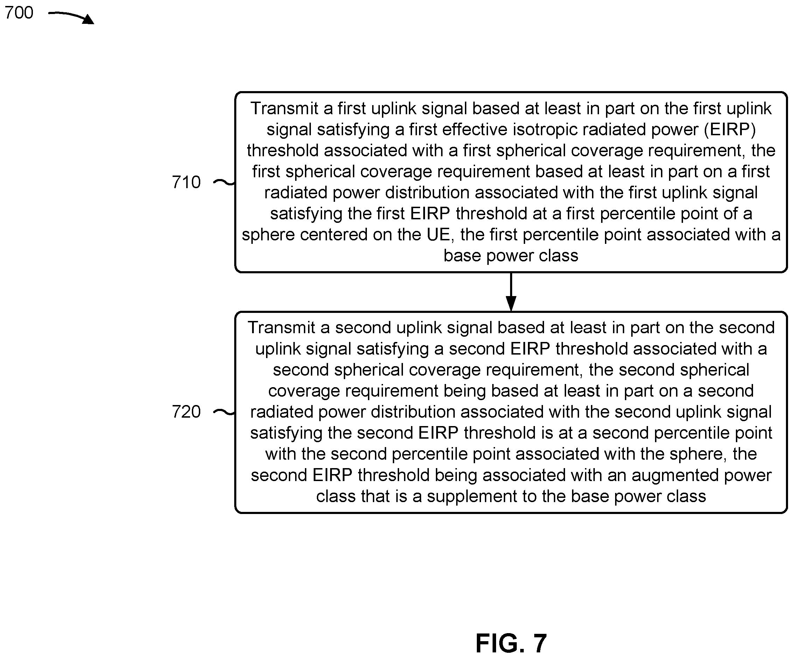

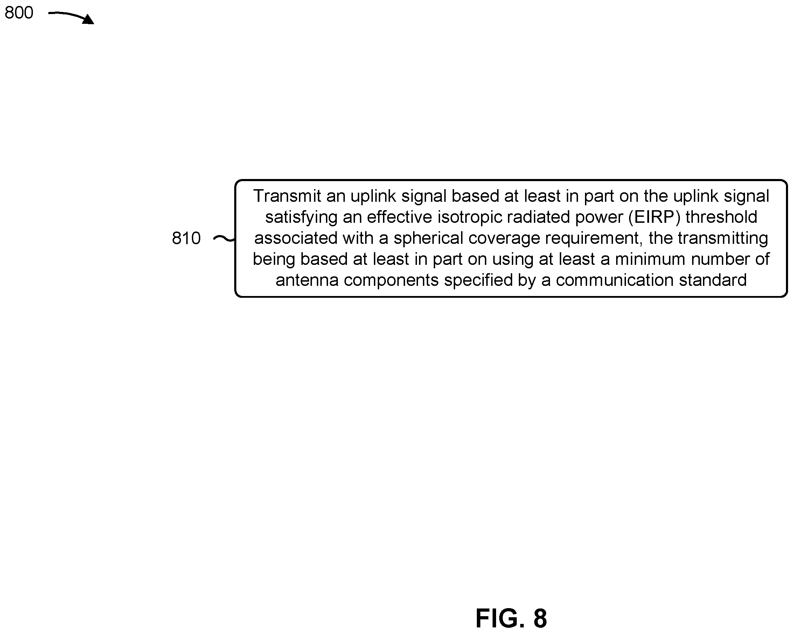

The controller/processor 240 of the network node 110, the controller/processor 280 of the UE 120, and/or any other component(s) of Fig. 2 may perform one or more techniques associated with an enhanced radiation requirement for a device operating at millimeter waves, as described in more detail elsewhere herein. For example, the controller/processor 240 of the network node 110, the controller/processor 280 of the UE 120, and/or any other component(s) of Fig. 2 may perform or direct operations of, for example, process 500 of Fig. 5, process 600 of Fig. 6, process 700 of Fig. 7, process 800 of Fig. 8, and/or other processes as described herein. The memory 242 and the memory 282 may store data and program codes for the network node 110 and the UE 120, respectively. In some examples, the memory 242 and/or the memory 282 may include a non-transitory computer-readable medium storing one or more instructions (e.g., code and/or program code) for wireless communication. For example, the one or more instructions, when executed (e.g., directly, or after compiling, converting, and/or interpreting) by one or more processors of the network node 110 and/or the UE 120, may cause the one or more processors, the UE 120, and/or the network node 110 to perform or direct operations of, for example, process 500 of Fig. 5, process 600 of Fig. 6, process 700 of Fig. 7, process 800 of Fig. 8, and/or other processes as described herein. In some examples, executing instructions may include running the instructions, converting the instructions, compiling the instructions, and/or interpreting the instructions, among other examples.

In some aspects, the UE includes means for transmitting an uplink signal based at least in part on the uplink signal satisfying an enhanced EIRP threshold associated with a spherical coverage requirement, the enhanced EIRP threshold being based at least in part on augmenting a base operating model associated with an absence of a blockage with a signal blockage model. The means for the UE to perform operations described herein may include, for example, one or more of communication manager 140, antenna 252, modem 254, MIMO detector 256, receive processor 258, transmit processor 264, TX MIMO processor 266, controller/processor 280, or memory 282.

In some aspects, the UE includes means for transmitting a first uplink signal based at least in part on the first uplink signal satisfying an EIRP threshold based at least in part on a first spherical coverage requirement, the first spherical coverage requirement being based at least in part on a first radiated power distribution associated with the first uplink signal satisfying the EIRP threshold at a first percentile point of a sphere centered on the UE; and/or means for transmitting a second uplink signal based at least in part on the second uplink signal satisfying the EIRP threshold based at least in part on a second spherical coverage requirement, the second spherical coverage requirement being based at least in part on a second radiated power distribution associated with the second uplink signal satisfying the EIRP threshold at a second percentile point of the sphere, wherein the first percentile point is lower than the second percentile point. The means for the UE to perform operations described herein may include, for example, one or more of communication manager 140, antenna 252, modem 254, MIMO detector 256, receive processor 258, transmit processor 264, TX MIMO processor 266, controller/processor 280, or memory 282.

In some aspects, the UE includes means for transmitting a first uplink signal based at least in part on the first uplink signal satisfying a first EIRP threshold associated with a first spherical coverage requirement, the first spherical coverage requirement based at least in part on a first radiated power distribution associated with the first uplink signal satisfying the first EIRP threshold at a first percentile point of a sphere centered on the UE, the first percentile point associated with a base power class; and/or means for transmitting a second uplink signal based at least in part on the second uplink signal satisfying a second EIRP threshold associated with a second spherical coverage requirement, the second spherical coverage requirement being based at least in part on a second radiated power distribution associated with the second uplink signal satisfying the second EIRP threshold is at a second percentile point with the second percentile point associated with the sphere, the second EIRP threshold being associated with an augmented power class that is a supplement to the base power class. The means for the UE to perform operations described herein may include, for example, one or more of communication manager 140, antenna 252, modem 254, MIMO detector 256, receive processor 258, transmit processor 264, TX MIMO processor 266, controller/processor 280, or memory 282.

In some aspects, the UE includes means for transmitting an uplink signal based at least in part on the uplink signal satisfying an EIRP threshold associated with a spherical coverage requirement, the transmitting being based at least in part on using at least a minimum number of antenna components specified by a communication standard. The means for the UE to perform operations described herein may include, for example, one or more of communication manager 140, antenna 252, modem 254, MIMO detector 256, receive processor 258, transmit processor 264, TX MIMO processor 266, controller/processor 280, or memory 282.

While blocks in Fig. 2 are illustrated as distinct components, the functions described above with respect to the blocks may be implemented in a single hardware, software, or combination component or in various combinations of components. For example, the functions described with respect to the transmit processor 264, the receive processor 258, and/or the TX MIMO processor 266 may be performed by or under the control of the controller/processor 280.

As indicated above, Fig. 2 is provided as an example. Other examples may differ from what is described with regard to Fig. 2.

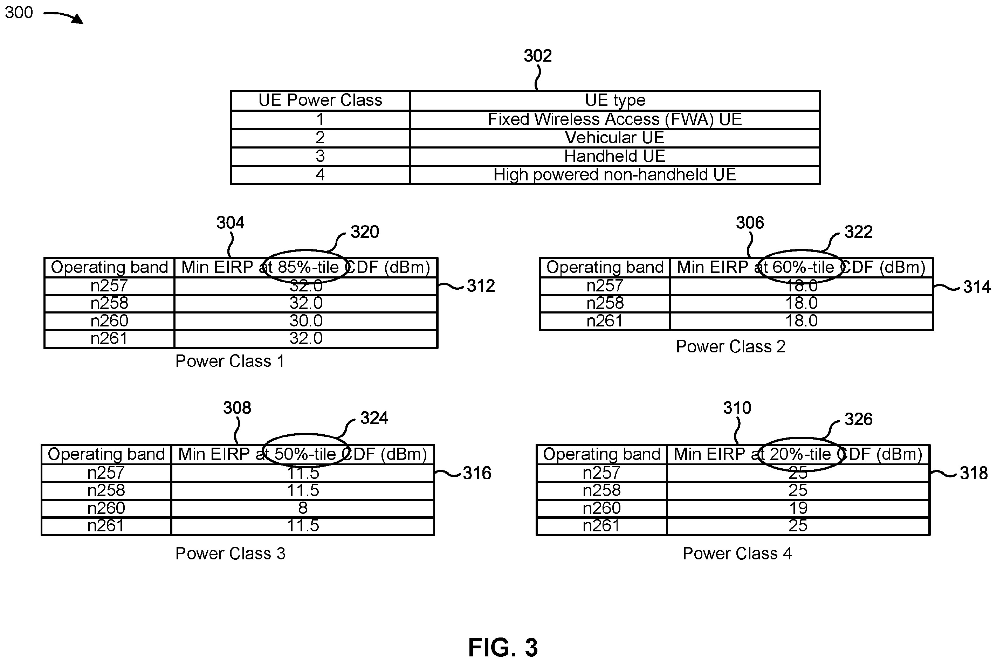

Fig. 3 is a diagram illustrating an example 300 of one or more metrics specified by a communication standard, in accordance with the present disclosure.

In some aspects, a wireless communication system may use millimeter waves (mmWaves) to transmit information and/or data, such as a wireless communication system that is based at least in part on using the above-6 GHz frequencies associated with FR1 and/or FR2. While transmissions that use mmWaves (or higher) may enable a device to transmit or receive the information and/or data at a higher capacity (e.g., a higher data rate or increased data throughput) relative to lower frequencies, the higher frequencies may be more susceptible to adverse channel conditions and/or blockages. As one example, a mmWave may observe increased recovery errors (relative to lower frequencies) based at least in part on multipath associated with reflections. As another example, the mmWave may provide increased data throughput (relative to the lower frequencies) when operating in line-of-sight (LoS) conditions with another device, but may be more susceptible to disruption by an obstruction and/or blockage that obscures LoS with the other device, such as a hand placed over an antenna, a building, or foliage, which may also result in increased recovery error at a receiver.

In some aspects, a governing body and/or communication standard may specify a radiation requirement associated with transmitting or receiving a signal. To illustrate, a communication standard (e.g., a 3GPP standard) may specify an effective isotropic radiated power (EIRP) requirement for transmissions. EIRP may denote a measure of radiated power in a single direction (e.g., signal strength in a main lobe), and may be based at least in part on a transmitter power, an adjustment to an antenna mismatch, a transmitter feedline loss, and/or a transmitter antenna gain. In some aspects, EIRP may be considered an amount of power radiated by a perfectly isotropic antenna (e.g., an omnidirectional antenna for all angles) to achieve the measured value. EIRP may alternatively be referred to as equivalent isotropic radiated power.

Alternatively or additionally, the governing body and/or communication standard may specify an effective isotropic sensitivity (EIS) requirement for a receiver. EIS may be considered a measure of receiver sensitivity in a single direction, and may be based at least in part on a receiver antenna gain, a receiver feedline loss, antenna efficiency, self-interference at the receiver, and/or bandwidth of operation. EIS may denote an amount of power received by an isotropic antenna (e.g., for all measured angles), and may alternatively be referred to as equivalent isotropic sensitivity. An EIRP metric and/or an EIS metric may be expressed using a unit of decibels per milliwatt (dBm) or decibels per watt (dBW).

In some aspects, the governing body and/or communication standard may specify a radiation compliance metric based at least in part on a type of device operating in a communication system. For example, as shown by table 302, the communication standard may specify multiple device types, such as a first type (e.g., power class 1) associated with a fixed device that uses fixed wireless access, a second type (e.g., power class 2) associated with a vehicular device, a third type (e.g., power class 3) associated with a handheld mobile device, and a fourth type (e.g., power class 4) associated with a high power handheld or non-handheld device. Based at least in part on specifying the multiple device types, the communication standard may specify a different radiation compliance metric for each device type. To illustrate, table 304 specifies example minimum EIRP compliance metrics for a device classified as a power class 1 device, table 306 specifies example minimum EIRP compliance metrics for a device classified as a power class 2 device, table 308 specifies example minimum EIRP compliance metrics for a device classified as a power class 3 device, and table 310 specifies example minimum EIRP compliance metrics for a device classified as a power class 4 device.

In some aspects, the communication standard may also specify different compliance metrics for different frequency bands. To illustrate, the communication standard may specify a first minimum EIRP compliance metric 312 for transmissions associated with an n257 operating band (e.g., 26500 MHz-29500 MHz) by a device classified as a power class 1 device. The communication standard may also specify a second minimum EIRP compliance metric 314 for transmissions associated with the n257 operating band by a device classified as a power class 2 device, a third minimum EIRP compliance metric 316 for transmissions associated with the n257 operating band by a device classified as a power class 3 device, and/or a fourth minimum EIRP compliance metric 318 for transmissions associated with the n257 operating band by a device classified as a power class 4 device.

As shown by the table 304, the table 306, the table 308, and the table 310, a radiation compliance metric may be associated with a spherical coverage requirement (e.g., a percentile point associated with a sphere centered on a device). For example, the table 304 specifies a first spherical coverage requirement 320 by specifying a first percentile point associated with a cumulative distribution function (CDF) that distributes a signal strength through the sphere centered on the device. As further shown by the example 300, the table 306 specifies a second spherical coverage requirement 322 associated with the second minimum EIRP compliance metric 314, the table 308 specifies a third spherical coverage requirement 324 associated with the third minimum EIRP compliance metric 316, and the table 310 specifies a fourth spherical coverage requirement 326 associated with the fourth minimum EIRP compliance metric 318. Thus, in some aspects, to be in compliance with the radiation compliance metrics shown by the table 304, a device must satisfy the minimum (specified) EIRP at the specified CDF percentile point. While the example 300 shows compliance metrics associated with EIRP, alternate or additional examples may include EIS compliance metrics.

In some aspects, a radiation compliance metric specified by a governing body and/or a communication standard may be based at least in part on an absence of blockages (e.g., a free-space environment). Accordingly, a device that satisfies a radiation compliance metric (e.g., an EIRP compliance metric or an EIS compliance metric) while operating in the absence of a blockage (e.g., a signal blockage) may suffer performance degradation when operating in the presence of a blockage. For example, and as further described above, a blockage, such as a hand covering or a body blocking a set of antenna elements, may introduce more errors to a mmWave transmission relative to a second transmission at a frequency lower than the mmWave transmission. Thus, the radiation compliance metric may fail to account for signal degradation associated with an obstruction and/or blockage, and a device that satisfies the radiation compliance metric when operating in an absence of a blockage may experience increased recovery errors, reduced data throughput, and/or increased data transfer latencies when operating in the presence of a blockage.

Some techniques and apparatuses described herein provide an enhanced radiation requirement for a device operating at millimeter wave frequencies. In some aspects, a device may transmit an uplink signal based at least in part on the uplink signal satisfying an enhanced EIRP spherical coverage threshold associated with a first spherical coverage requirement (e.g., a percentile point on a sphere centered on the device). The enhanced EIRP threshold may be based at least in part on augmenting a base operating model associated with an absence of a blockage with a signal blockage model. A signal blockage model may denote a model that estimates signal attenuation based at least in part on a presence of an obstruction and/or one or more characteristics of the obstruction (e.g., a size, a material, and/or a dielectric property). Alternatively or additionally, the signal blockage model may estimate the signal attenuation based at least in part on a transmission frequency associated with a signal.

In some aspects, the device may receive a downlink signal based at least in part on the downlink signal satisfying an EIS spherical coverage threshold associated with a second spherical coverage requirement. The enhanced EIS threshold may be based at least in part on augmenting the base operating model associated with the absence of the blockage with the signal blockage model.

An enhanced compliance metric threshold, such as an enhanced EIRP spherical coverage threshold and/or an enhanced EIS spherical coverage threshold, may denote a compliance metric threshold that improves upon a base compliance metric threshold (e.g., a radiation compliance metric threshold associated with an absence of a blockage) by augmenting a base operating model used to generate the base compliance metric threshold with a signal blockage model. The enhanced compliance metric threshold may improve how a device operates in a wireless communication system by specifying a compliance metric threshold that enables a device to operate in more operating conditions (e.g., in the presence of a blockage and in the absence of a blockage), with fewer recovery errors, relative to the base compliance metric threshold. Alternatively or additionally, the enhanced compliance metric threshold may enable the device to operate in more operating conditions with increased data throughput and/or reduced data transfer latencies relative to the base compliance metric threshold.

As indicated above, Fig. 3 is provided as an example. Other examples may differ from what is described with regard to Fig. 3.

Fig. 4 is a diagram illustrating an example 400 of a wireless communication process between a UE (e.g., the UE 120) and a network note (e.g., the network node 110), in accordance with the present disclosure. While the example 400 includes a network node in communication with the UE, other examples may include other types of computing devices, such as a test equipment computing device that includes capabilities to generate an EIRP metric.

As shown by reference number 410, a UE (e.g., the UE 120) may transmit an uplink signal based at least in part on an enhanced compliance metric threshold. To illustrate, the UE may transmit the uplink signal based at least in part on satisfying an enhanced EIRP threshold. As further described above, the enhanced EIRP threshold may be based at least in part on a signal blockage model that provides an enhancement to a base operating model associated with an absence of a blockage. For example, the enhanced compliance metric threshold may augment a base compliance metric threshold (e.g., associated with the absence of the blockage) based at least in part on a signal blockage metric that results in an enhanced compliance metric threshold that is lower than the base compliance metric threshold.

As one example of transmitting the uplink signal, the UE 120 may transmit the uplink signal in a presence of a signal blockage at the UE while satisfying the enhanced compliance metric threshold. Alternatively or additionally, the UE 120 may transmit a second uplink signal in the absence of a signal blockage while satisfying the same enhanced compliance metric threshold. To illustrate, the enhanced compliance metric threshold may be associated with a spherical coverage requirement associated with a sphere centered on the UE, such as a percentile point associated with the sphere. The UE 120 may satisfy the same enhanced compliance metric threshold at a same percentile point for the first uplink transmission in the presence of the signal blockage and the second uplink transmission in the absence of the signal blockage. The percentile point, for instance, may be based at least in part on the UE operating in the presence of a blockage. In some aspects, satisfying a radiation compliance metric in the presence of a blockage may be more difficult for the UE (e.g., the UE may use more antenna modules and/or a set of antenna elements enhanced over a base antenna element to satisfy the radiation compliance metric) such that satisfying a radiation compliance metric associated with the presence of a blockage may also enable the UE to satisfy a radiation compliance metric associated with the absence of the blockage and/or mitigate performance errors (e.g., recovery errors) in the absence of the blockage.

The UE 120 may satisfy, for the uplink signal, an enhanced compliance metric threshold that is based at least in part on a power class type and/or a device classification associated with the UE 120. For example, the UE 120 may satisfy a first enhanced compliance metric threshold associated with the UE being classified as a power class 1 device, a second enhanced compliance metric threshold associated with the UE being classified as a power class 2 device, a third enhanced compliance metric threshold associated with the UE being classified as a power class 3 device, or a fourth enhanced compliance metric threshold associated with the UE being classified as a power class 4 device.

In some aspects, the UE 120 may transmit the uplink signal based at least in part on an enhanced compliance metric threshold associated with an augmented power class. To illustrate, a communication standard may specify a base compliance metric threshold for a device classified as a power class 3 device. In some aspects, the communication standard may specify an enhanced compliance metric threshold associated with an augmented power class 3 that augments the (base) power class 3 based at least in part on a signal blockage model. For instance, the UE 120 may transmit a first uplink signal based at least in part on satisfying a first EIRP threshold associated with a base power class (e.g., a power class 3) and a second uplink signal based at least in part on the second uplink signal satisfying a second EIRP threshold associated with an augmented power class (e.g., an augmented power class 3). Alternatively or additionally, a network operator may specify the augmented power class 3 and/or the second EIRP threshold (e.g., as a network operator requirement).

The first EIRP threshold associated with the base power class and the second EIRP threshold associated with the augmented power class may be associated with a respective spherical coverage requirement. To illustrate, the first EIRP threshold may be based at least in part on a first radiated power distribution over a sphere centered on the UE, where a first spherical coverage requirement specifies that compliance may be based at least in part on the first radiated power distribution satisfying and/or exceeding the first EIRP threshold at a first percentile point of the sphere. The second EIRP spherical coverage threshold may be based at least in part on a second radiated power distribution over the sphere, where a second spherical coverage requirement specifies that compliance may be based at least in part on the second radiated power distribution satisfying and/or exceeding the second EIRP spherical coverage threshold at a second percentile point of the sphere.

The signal blockage model associated with the enhanced compliance metric threshold may be based at least in part on one or more signal blockage models, such as a one-handed signal blockage model (e.g., a model of one hand blocking one or more transmitting antenna of a set of transmitting antenna elements), a two-handed signal blockage model (e.g., a model of two hands blocking one or more transmitting antennas), a partitioned blockage model that includes an air gap within the partitioned signal blockage model (e.g., a model of a hand blockage model that positions the air gap between two fingers of a hand), a hand phantom-based blockage model, a loss distribution function that models an observed loss associated with a signal blockage, and/or a spherical coverage distribution function that models transmission power distribution in a sphere centered on the UE based at least in part on the signal blockage model. In one or more examples, an enhanced EIRP threshold may be based at least in part on a combination of a hand blockage model and a head blockage model that models a user holding the UE with a hand and adjacent to a head.

In some aspects, the UE 120 may transmit the uplink signal based at least in part on an enhanced compliance metric threshold specified by a network operator (e.g., a network operator requirement). For example, the network operator may specify an enhanced compliance metric threshold that is based at least in part on a base compliance metric threshold specified by a communication standard and a signal blockage model. To illustrate, the communication standard may specify a base EIRP threshold associated with a spherical coverage requirement (e.g., a percentile point associated with a sphere centered on a UE), and the network operator may specify, as a network operator requirement, an enhanced EIRP threshold that is based at least in part on the base EIRP threshold associated with the communication standard and one or more signal blockage models. Some example signal blockage models may include a first model associated with the UE operating in an absence of a signal blockage (e.g., a free-space model), a second model associated with the UE operating adjacent to and/or beside a head blockage, and/or a third model associated with the UE operating adjacent to a hand blockage.

The network operator may specify a first enhanced EIRP threshold associated with the first model as a first network operator requirement, a second enhanced EIRP threshold associated with the second model as a second network operator requirement, and a third enhanced EIRP threshold associated with the third model as a third network operator requirement. In some aspects, the enhanced EIRP threshold specified by the network operator may be based at least in part on a combination of signal blockage models, such as a combination of the second model associated with the UE operating adjacent to a head blockage and the third model associated with the UE operating adjacent to the hand blockage to model a user holding the UE in a hand next to a head (e.g., an ear). Alternatively or additionally, the network operator compliance metric thresholds may be associated with a spherical coverage requirement.

The enhanced compliance metric threshold may be based at least in part on the uplink signal satisfying a millimeter wave threshold. For example, a communication standard may specify a first (base) compliance metric threshold (e.g., a base EIRP threshold) associated with a first uplink signal that fails to satisfy the millimeter waveform threshold and a second (augmented) compliance metric threshold (e.g., an augmented EIRP threshold) associated with associated with a second uplink signal that satisfies the millimeter waveform threshold. Alternatively or additionally, a network may specify the second (augmented) compliance threshold as a network operator requirement.

In some aspects, the UE 120 may transmit the uplink signal based at least in part on satisfying a minimum number of antenna modules specified by a communication standard and/or a network operator. An antenna module may include any combination of hardware, software, and/or firmware used to transmit and/or receive a wireless signal with one or more antenna elements. To illustrate, an antenna module may include a linear antenna array mounted on the edge of the UE, a planar antenna array, and/or an L-shaped antenna module configured to be placed on an edge and a back face of a device. In some aspects, the communication standard and/or the network operator may specify a minimum number of antenna module components (e.g., two antenna components, three antenna components, or four antenna components) to use for satisfying an enhanced compliance metric threshold. Alternatively or additionally, the communication standard and/or the network operator may specify a combination of minimum antenna components to use, such as a first (minimum) number of antenna components to use for an uplink transmission and a second (minimum) number of antenna components to use for a downlink transmission.

The UE 120 may transmit the uplink signal based at least in part on an EIRP threshold associated with a spherical coverage requirement that may be associated with both a first signal transmitted in a presence of a signal blockage and a second signal transmitted in an absence of the signal blockage. For instance, the EIRP threshold may be associated with a first spherical coverage requirement (e.g., a first percentile point) for signals that satisfy a millimeter wave threshold and a second spherical coverage requirement (e.g., a second percentile point) for signals that fail to satisfy the millimeter wave threshold, where the first percentile point may be lower than the second percentile point. In some aspects, the first percentile point may be selected such that satisfying the first spherical coverage requirement with a first signal transmitted in the presence of a signal blockage may ensure that a second signal transmitted in the absence of the signal blockage may also satisfy the first spherical coverage requirement. The first spherical coverage requirement associated with a mmWave transmission, for instance, may be associated with a lower percentile point on the sphere centered on the UE relative to the second spherical coverage requirement associated with a non-mmWave (e.g., lower frequencies) transmission. Thus, the EIRP threshold may apply to both a first uplink signal transmitted in the presence of the signal blockage and a second uplink signal transmitted in the absence of the signal blockage.

In some aspects, a network operator may specify, as a network operator requirement, an EIRP threshold that may be associated with both a first signal transmitted in the presence of a signal blockage and a second signal transmitted in the absence of the signal blockage. The network operator may alternatively or additionally specify such an EIRP threshold based at least in part on a device type and/or device classification as further described above.

As shown by reference number 420, the UE 120 may receive a downlink signal based at least in part on an enhanced compliance metric threshold, such as an enhanced EIS threshold that is based at least in part on a signal blockage model that provides an enhancement to a base operating model associated with an absence of a blockage as further described above. The enhanced EIS threshold may be associated with a spherical coverage requirement associated with a sphere centered on the UE (e.g., a percentile point). Alternatively or additionally, the enhanced EIS threshold may be based at least in part on a power class type and/or a device classification associated with the UE 120.

In some aspects, the UE 120 may receive the downlink signal based at least in part on an enhanced EIS threshold associated with an augmented power class, such as an augmented power class 3 that augments a base power class 3. The EIS threshold associated with the base power class and the enhanced EIRP threshold associated with the augmented power class may be associated with respective spherical coverage requirements as further described above. The enhanced EIS threshold associated with the augmented power class may be based at least in part on one or more signal blockage models. Alternatively or additionally, the enhanced EIS threshold may be based at least in part on a base EIS threshold specified by a communication standard.

The enhanced EIS threshold may be specified by a network operator as a network operator requirement. The network operator may alternatively or additionally specify multiple enhanced EIS thresholds, where each enhanced EIS threshold may be associated with a respective signal blockage model as further described above.

In some aspects, the enhanced EIS threshold may be based at least in part on the downlink signal satisfying a millimeter wave threshold. To illustrate, a communication standard may specify a base EIS threshold associated with a first downlink signal that fails to satisfy the millimeter waveform threshold and the enhanced EIS threshold may be associated with a second uplink signal that satisfies the millimeter waveform threshold.

The UE 120 may receive the downlink signal based at least in part on satisfying a minimum number of antenna components. To illustrate, the minimum number of antenna components may be specified by a communication standard and/or a network operator.

The UE 120 may receive the downlink signal based at least in part on an EIS threshold that is associated with a spherical coverage requirement that may be applicable to both a first signal received in the presence of a signal blockage and a second signal received in the absence of the signal blockage. For instance, the spherical coverage requirement may be associated with a first percentile point for signals (e.g., blocked or unblocked) that satisfy a millimeter wave threshold. A second percentile point associated with a second spherical coverage requirement may be associated with for signals that fail to satisfy the millimeter wave threshold. The first percentile point may be lower than a second percentile point such that, for one or more mmWaves, the EIS threshold may apply to both a first downlink signal received in the presence of the signal blockage and a second downlink signal received in the absence of the signal blockage. In some aspects, a network operator may specify such an EIS threshold and/or spherical coverage requirement as a network operator requirement.

An enhanced compliance metric threshold, such as an enhanced EIRP threshold and/or an enhanced EIS threshold associated with a spherical coverage requirement, may improve how a device operates in a wireless communication system. To illustrate, the enhanced compliance metric threshold enables a device to operate in more operating conditions (e.g., in the presence of a blockage and in the absence of a blockage) with fewer recovery errors, increased data throughput and/or reduced data transfer latencies relative to a base compliance metric threshold.

As indicated above, Fig. 4 is provided as an example. Other examples may differ from what is described with regard to Fig. 4.

Fig. 5 is a diagram illustrating an example process 500 performed, for example, by a UE, in accordance with the present disclosure. Example process 500 is an example where the UE (e.g., UE 120) performs operations associated with an enhanced radiation requirement for a device operating at millimeter wave frequencies.

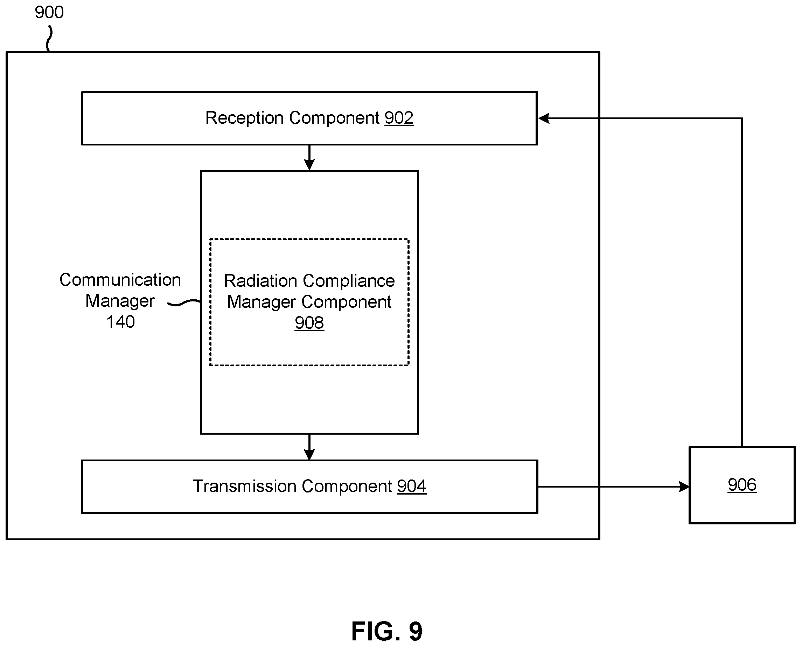

As shown in Fig. 5, in some aspects, process 500 may include transmitting an uplink signal based at least in part on the uplink signal satisfying an EIRP threshold associated with a spherical coverage requirement, the enhanced EIRP threshold being based at least in part on augmenting a base operating model associated with an absence of a blockage with a signal blockage model (block 510). For example, the UE (e.g., using communication manager 140 and/or transmission component 904, depicted in Fig. 9) may transmit an uplink signal based at least in part on the uplink signal satisfying an enhanced EIRP threshold associated with a spherical coverage requirement, the enhanced EIRP threshold being based at least in part on augmenting a base operating model associated with an absence of a blockage with a signal blockage model, as described above.

Process 500 may include additional aspects, such as any single aspect or any combination of aspects described below and/or in connection with one or more other processes described elsewhere herein.

In a first aspect, the uplink signal may be a first uplink signal, transmitting the uplink signal may include transmitting the first uplink signal in a presence of a signal blockage while satisfying the enhanced EIRP threshold, and the process 500 includes transmitting a second uplink signal in the absence of the signal blockage while satisfying the enhanced EIRP threshold.

In a second aspect, alone or in combination with the first aspect, the signal blockage model is based at least in part on at least one of a one-handed signal blockage model, a two-handed signal blockage model, a partitioned signal blockage model that includes an air gap within the partitioned signal blockage model, a hand phantom-based blockage model, a loss distribution function that models an observed loss associated with a signal blockage, or a spherical coverage distribution function that models transmission power distribution based at least in part on the signal blockage model.

In a third aspect, alone or in combination with one or more of the first and second aspects, the partitioned signal blockage model that includes the air gap may include a hand blockage model that positions the air gap between two fingers of a hand.

In a fourth aspect, alone or in combination with one or more of the first through third aspects, the enhanced EIRP threshold is based at least in part on the UE being classified as a power class 1 device, the UE being classified as a power class 2 device, the UE being classified as a power class 3 device, or the UE being classified as a power class 4 device.

In a fifth aspect, alone or in combination with one or more of the first through fourth aspects, the spherical coverage requirement associated with the enhanced EIRP threshold is based at least in part on a percentile point of radiated power distribution over a sphere centered on the UE.

In a sixth aspect, alone or in combination with one or more of the first through fifth aspects, the enhanced EIRP threshold is based at least in part on a network operator requirement.

In a seventh aspect, alone or in combination with one or more of the first through sixth aspects, the enhanced EIRP threshold associated with the network operator requirement is based at least in part on at least one of a first model based at least in part on the UE operating in an absence of a signal blockage, a second model based at least in part on the UE operating adjacent to a head blockage, or a third model based at least in part on the UE operating adjacent to a hand blockage.

In an eighth aspect, alone or in combination with one or more of the first through seventh aspects, the first model is based at least in part on the UE operating in free-space.

In a ninth aspect, alone or in combination with one or more of the first through eighth aspects, the enhanced EIRP threshold is based at least in part on a combination of the second model and the third model.

In a tenth aspect, alone or in combination with one or more of the first through ninth aspects, the enhanced EIRP threshold is based at least in part on the uplink signal satisfying a millimeter waveform threshold.

In an eleventh aspect, alone or in combination with one or more of the first through tenth aspects, the spherical coverage requirement is a first spherical coverage requirement, and process 500 further includes receiving a downlink signal based at least in part on satisfying an enhanced EIS threshold that is based at least in part on augmenting the base operating model associated with the absence of the blockage with the signal blockage model.

In a twelfth aspect, alone or in combination with one or more of the first through eleventh aspects, the enhanced EIS threshold is based at least in part on the downlink signal satisfying a millimeter waveform threshold.

Although Fig. 5 shows example blocks of process 500, in some aspects, process 500 may include additional blocks, fewer blocks, different blocks, or differently arranged blocks than those depicted in Fig. 5. Additionally, or alternatively, two or more of the blocks of process 500 may be performed in parallel.

Fig. 6 is a diagram illustrating an example process 600 performed, for example, by a UE, in accordance with the present disclosure. Example process 600 is an example where the UE (e.g., UE 120) performs operations associated with an enhanced radiation requirement for a device operating at millimeter wave frequencies.

As shown in Fig. 6, in some aspects, process 600 may include transmitting a first uplink signal based at least in part on the first uplink signal satisfying an EIRP threshold based at least in part on a first spherical coverage requirement, the first spherical coverage requirement being based at least in part on a first radiated power distribution associated with the first uplink signal satisfying the EIRP threshold at a first percentile point of a sphere centered on the UE (block 610). For example, the UE (e.g., using communication manager 140 and/or transmission component 904, depicted in Fig. 9) may transmit a first uplink signal based at least in part on the first uplink signal satisfying an EIRP threshold based at least in part on a first spherical coverage requirement, the first spherical coverage requirement being based at least in part on a first radiated power distribution associated with the first uplink signal satisfying the EIRP threshold at a first percentile point of a sphere centered on the UE, as described above.

As further shown in Fig. 6, in some aspects, process 600 may include transmitting a second uplink signal based at least in part on the second uplink signal satisfying the EIRP threshold based at least in part on a second spherical coverage requirement, the second spherical coverage requirement being based at least in part on a second radiated power distribution associated with the second uplink signal satisfying the second EIRP threshold at a second percentile point of the sphere. In some aspects, the first percentile point is lower than the second percentile point (block 620). For example, the UE (e.g., using communication manager 140 and/or transmission component 904, depicted in Fig. 9) may transmit a second uplink signal based at least in part on the second uplink signal satisfying the EIRP threshold based at least in part on a second spherical coverage requirement, the second spherical coverage requirement being based at least in part on a second radiated power distribution associated with the second uplink signal satisfying the second EIRP threshold at a second percentile point of the sphere. In some aspects, the first percentile point is lower than the second percentile point.

Process 600 may include additional aspects, such as any single aspect or any combination of aspects described below and/or in connection with one or more other processes described elsewhere herein.

In a first aspect, the first EIRP threshold is based at least in part on the first uplink signal satisfying a millimeter wave threshold, and the second EIRP threshold is based at least in part on the second uplink signal failing to satisfy the millimeter wave threshold.

In a second aspect, alone or in combination with the first aspect, the first EIRP threshold or the second EIRP threshold is based at least in part on the UE being classified as a power class 1 device, the UE being classified as a power class 2 device, the UE being classified as a power class 3 device, or the UE being classified as a power class 4 device.

In a third aspect, alone or in combination with one or more of the first and second aspects, at least one of the first EIRP spherical coverage threshold or the second EIRP spherical coverage threshold is based at least in part on a network operator requirement.

In a fourth aspect, alone or in combination with one or more of the first through third aspects, transmitting the first uplink signal based at least in part on the first uplink signal satisfying the first EIRP threshold includes transmitting the first uplink signal based at least in part on a presence of a signal blockage, or transmitting the first uplink signal based at least in part on an absence of the signal blockage.

In a fifth aspect, alone or in combination with one or more of the first through fourth aspects, process 600 includes receiving a first downlink signal based at least in part on satisfying a first EIS threshold associated with a third spherical coverage requirement, the third spherical coverage requirement being based at least in part on a first receive power associated with the first downlink signal satisfying the first EIS threshold at a third percentile point of the sphere centered on the UE, and receiving a second downlink signal based at least in part on satisfying a second EIS threshold based at least in part on satisfying a second EIS threshold associated with a fourth spherical coverage requirement, the fourth spherical coverage requirement being based at least in part on a second receive power associated with second first downlink signal satisfying the second EIS threshold at a fourth percentile point of the sphere centered on the UE, where the third percentile point is lower than the fourth percentile point.

Although Fig. 6 shows example blocks of process 600, in some aspects, process 600 may include additional blocks, fewer blocks, different blocks, or differently arranged blocks than those depicted in Fig. 6. Additionally, or alternatively, two or more of the blocks of process 600 may be performed in parallel.

Fig. 7 is a diagram illustrating an example process 700 performed, for example, by a UE, in accordance with the present disclosure. Example process 700 is an example where the UE (e.g., UE 120) performs operations associated with an enhanced radiation requirement for a device operating at millimeter wave frequencies.

As shown in Fig. 7, in some aspects, process 700 may include transmitting a first uplink signal based at least in part on the first uplink signal satisfying a first EIRP threshold associated with a first spherical coverage requirement, the first spherical coverage requirement based at least in part on a first radiated power distribution associated with the first uplink signal satisfying the first EIRP threshold at a first percentile point of a sphere centered on the UE, the first percentile point associated with a base power class (block 710). For example, the UE (e.g., using communication manager 140 and/or transmission component 904, depicted in Fig. 9) may transmit a first uplink signal based at least in part on the first uplink signal satisfying a first EIRP threshold associated with a first spherical coverage requirement, the first spherical coverage requirement based at least in part on a first radiated power distribution associated with the first uplink signal satisfying the first EIRP threshold at a first percentile point of a sphere centered on the UE, the first percentile point associated with a base power class, as described above.

As further shown in Fig. 7, in some aspects, process 700 may include transmitting a second uplink signal based at least in part on the second uplink signal satisfying a second EIRP threshold associated with a second spherical coverage requirement, the second spherical coverage requirement being based at least in part on a second radiated power distribution associated with the second uplink signal satisfying the second EIRP threshold is at a second percentile point with the second percentile point associated with the sphere, the second EIRP threshold being associated with an augmented power class that is a supplement to the base power class (block 720). For example, the UE (e.g., using communication manager 140 and/or transmission component 904, depicted in Fig. 9) may transmit a second uplink signal based at least in part on the second uplink signal satisfying a second EIRP threshold associated with a second spherical coverage requirement, the second spherical coverage requirement being based at least in part on a second radiated power distribution associated with the second uplink signal satisfying the second EIRP threshold is at a second percentile point with the second percentile point associated with the sphere, the second EIRP threshold being associated with an augmented power class that is a supplement to the base power class, as described above.

Process 700 may include additional aspects, such as any single aspect or any combination of aspects described below and/or in connection with one or more other processes described elsewhere herein.

Although Fig. 7 shows example blocks of process 700, in some aspects, process 700 may include additional blocks, fewer blocks, different blocks, or differently arranged blocks than those depicted in Fig. 7. Additionally, or alternatively, two or more of the blocks of process 700 may be performed in parallel.

Fig. 8 is a diagram illustrating an example process 800 performed, for example, by a UE, in accordance with the present disclosure. Example process 800 is an example where the UE (e.g., UE 120) performs operations associated with an enhanced radiation requirement for a device operating at millimeter wave frequencies.

As shown in Fig. 8, in some aspects, process 800 may include transmitting an uplink signal based at least in part on the uplink signal satisfying an EIRP threshold associated with a spherical coverage requirement, the transmitting being based at least in part on using at least a minimum number of antenna components specified by a communication standard (block 810). For example, the UE (e.g., using communication manager 140 and/or transmission component 904, depicted in Fig. 9) may transmit an uplink signal based at least in part on the uplink signal satisfying an EIRP threshold associated with a spherical coverage requirement, the transmitting being based at least in part on using at least a minimum number of antenna components specified by a communication standard, as described above. Alternatively or additionally, the minimum number of antenna components may be specified by a network operator as a network operating requirement.

Process 800 may include additional aspects, such as any single aspect or any combination of aspects described below and/or in connection with one or more other processes described elsewhere herein.

In a first aspect, the spherical coverage requirement is a first spherical coverage requirement, and process 800 further includes receiving a downlink signal based at least in part on the downlink signal satisfying an EIS threshold associated with a second spherical coverage requirement, the receiving being based at least in part on using at least the minimum number of antenna components specified by the communication standard.

In a second aspect, alone or in combination with the first aspect, an antenna component may include an antenna panel or an antenna module.

In a third aspect, alone or in combination with one or more of the first and second aspects, the minimum number of antenna components specified by the communication standard may include at least one of a first number of antenna components associated with an uplink transmission, or a second number of antenna components associated with a downlink transmission.

Although Fig. 8 shows example blocks of process 800, in some aspects, process 800 may include additional blocks, fewer blocks, different blocks, or differently arranged blocks than those depicted in Fig. 8. Additionally, or alternatively, two or more of the blocks of process 800 may be performed in parallel.

Fig. 9 is a diagram of an example apparatus 900 for wireless communication, in accordance with the present disclosure. The apparatus 900 may be a UE, or a UE may include the apparatus 900. In some aspects, the apparatus 900 includes a reception component 902 and a transmission component 904, which may be in communication with one another (for example, via one or more buses and/or one or more other components). As shown, the apparatus 900 may communicate with another apparatus 906 (such as a UE, a base station, or another wireless communication device) using the reception component 902 and the transmission component 904. As further shown, the apparatus 900 may include the communication manager 140. The communication manager 140 may include one or more of a radiation compliance manager component 908, among other examples.

In some aspects, the apparatus 900 may be configured to perform one or more operations described herein in connection with Figs. 3 and 4. Additionally, or alternatively, the apparatus 900 may be configured to perform one or more processes described herein, such as process 500 of Fig. 5, process 600 of Fig. 6, process 700 of Fig. 7, process 800 of Fig. 8, or a combination thereof. In some aspects, the apparatus 900 and/or one or more components shown in Fig. 9 may include one or more components of the UE described in connection with Fig. 2. Additionally, or alternatively, one or more components shown in Fig. 9 may be implemented within one or more components described in connection with Fig. 2. Additionally, or alternatively, one or more components of the set of components may be implemented at least in part as software stored in a memory. For example, a component (or a portion of a component) may be implemented as instructions or code stored in a non-transitory computer-readable medium and executable by a controller or a processor to perform the functions or operations of the component.

The reception component 902 may receive communications, such as reference signals, control information, data communications, or a combination thereof, from the apparatus 906. The reception component 902 may provide received communications to one or more other components of the apparatus 900. In some aspects, the reception component 902 may perform signal processing on the received communications (such as filtering, amplification, demodulation, analog-to-digital conversion, demultiplexing, deinterleaving, de-mapping, equalization, interference cancellation, or decoding, among other examples), and may provide the processed signals to the one or more other components of the apparatus 900. In some aspects, the reception component 902 may include one or more antennas, a modem, a demodulator, a MIMO detector, a receive processor, a controller/processor, a memory, or a combination thereof, of the UE described in connection with Fig. 2.

The transmission component 904 may transmit communications, such as reference signals, control information, data communications, or a combination thereof, to the apparatus 906. In some aspects, one or more other components of the apparatus 900 may generate communications and may provide the generated communications to the transmission component 904 for transmission to the apparatus 906. In some aspects, the transmission component 904 may perform signal processing on the generated communications (such as filtering, amplification, modulation, digital-to-analog conversion, multiplexing, interleaving, mapping, or encoding, among other examples), and may transmit the processed signals to the apparatus 906. In some aspects, the transmission component 904 may include one or more antennas, a modem, a modulator, a transmit MIMO processor, a transmit processor, a controller/processor, a memory, or a combination thereof, of the UE described in connection with Fig. 2. In some aspects, the transmission component 904 may be co-located with the reception component 902 in a transceiver.

The transmission component 904 may transmit an uplink signal based at least in part on the uplink signal satisfying an enhanced EIRP threshold associated with a spherical coverage requirement, the enhanced EIRP threshold being based at least in part on augmenting a base operating model associated with an absence of a blockage with a signal blockage model. In some aspects, the radiation compliance manager component 908 may direct the transmission component 904 to transmit the uplink signal.

The transmission component 904 may transmit a first uplink signal based at least in part on the first uplink signal satisfying an EIRP threshold based at least in part on a first spherical coverage requirement, the first spherical coverage requirement being based at least in part on a first radiated power distribution associated with the first uplink signal satisfying the EIRP threshold at a first percentile point of a sphere centered on the UE. The transmission component 904 may transmit a second uplink signal based at least in part on the second uplink signal satisfying the EIRP threshold based at least in part on a second spherical coverage requirement, the second spherical coverage requirement being based at least in part on a second radiated power distribution associated with the second uplink signal satisfying the second EIRP threshold at a second percentile point of the sphere, where the first percentile point is lower than the second percentile point. In some aspects, the radiation compliance manager component 908 may direct the transmission component 904 to transmit the uplink signal.

The reception component 902 may receive a first downlink signal based at least in part on satisfying a first EIS threshold associated with a third spherical coverage requirement, the third spherical coverage requirement being based at least in part on a first receive power associated with the first downlink signal satisfying the first EIS threshold at a third percentile point of the sphere centered on the UE. In some aspects, the radiation compliance manager component 908 may direct the reception component 902 to receive the uplink signal.

The reception component 902 may receive a second downlink signal based at least in part on satisfying a second EIS threshold based at least in part on satisfying a second EIS threshold associated with a fourth spherical coverage requirement, the fourth spherical coverage requirement being based at least in part on a second receive power associated with second first downlink signal satisfying the second EIS threshold at a fourth percentile point of the sphere centered on the UE where the third percentile point is lower than the fourth percentile point.

The transmission component 904 may transmit a first uplink signal based at least in part on the first uplink signal satisfying a first EIRP threshold associated with a first spherical coverage requirement, the first spherical coverage requirement based at least in part on a first radiated power distribution associated with the first uplink signal satisfying the first EIRP threshold at a first percentile point of a sphere centered on the UE, the first percentile point associated with a base power class. The transmission component 904 may transmit a second uplink signal based at least in part on the second uplink signal satisfying a second EIRP threshold associated with a second spherical coverage requirement, the second spherical coverage requirement being based at least in part on a second radiated power distribution associated with the second uplink signal satisfying the second EIRP threshold is at a second percentile point with the second percentile point associated with the sphere, the second EIRP threshold being associated with an augmented power class that is a supplement to the base power class. In some aspects, the radiation compliance manager component 908 may direct the transmission component 904 to transmit the uplink signal.

The transmission component 904 may transmit an uplink signal based at least in part on the uplink signal satisfying an effective isotropic radiated power EIRP threshold associated with a spherical coverage requirement, the transmitting being based at least in part on using at least a minimum number of antenna components specified by a communication standard and/or a network operator. For example, the transmission component 904 may include and/or be coupled to the minimum number of antenna components.

The number and arrangement of components shown in Fig. 9 are provided as an example. In practice, there may be additional components, fewer components, different components, or differently arranged components than those shown in Fig. 9. Furthermore, two or more components shown in Fig. 9 may be implemented within a single component, or a single component shown in Fig. 9 may be implemented as multiple, distributed components. Additionally, or alternatively, a set of (one or more) components shown in Fig. 9 may perform one or more functions described as being performed by another set of components shown in Fig. 9.

The foregoing disclosure provides illustration and description but is not intended to be exhaustive or to limit the aspects to the precise forms disclosed. Modifications and variations may be made in light of the above disclosure or may be acquired from practice of the aspects.

As used herein, the term "component" is intended to be broadly construed as hardware and/or a combination of hardware and software. "Software" shall be construed broadly to mean instructions, instruction sets, code, code segments, program code, programs, subprograms, software modules, applications, software applications, software packages, routines, subroutines, objects, executables, threads of execution, procedures, and/or functions, among other examples, whether referred to as software, firmware, middleware, microcode, hardware description language, or otherwise. As used herein, a "processor" is implemented in hardware and/or a combination of hardware and software. It will be apparent that systems and/or methods described herein may be implemented in different forms of hardware and/or a combination of hardware and software. The actual specialized control hardware or software code used to implement these systems and/or methods is not limiting of the aspects. Thus, the operation and behavior of the systems and/or methods are described herein without reference to specific software code, since those skilled in the art will understand that software and hardware can be designed to implement the systems and/or methods based, at least in part, on the description herein.

As used herein, "satisfying a threshold" may, depending on the context, refer to a value being greater than the threshold, greater than or equal to the threshold, less than the threshold, less than or equal to the threshold, equal to the threshold, not equal to the threshold, or the like.

Even though particular combinations of features are recited in the claims and/or disclosed in the specification, these combinations are not intended to limit the disclosure of various aspects. Many of these features may be combined in ways not specifically recited in the claims and/or disclosed in the specification. The disclosure of various aspects includes each dependent claim in combination with every other claim in the claim set. As used herein, a phrase referring to "at least one of" a list of items refers to any combination of those items, including single members. As an example, "at least one of: a, b, or c" is intended to cover a, b, c, a + b, a + c, b + c, and a + b + c, as well as any combination with multiples of the same element (e.g., a + a, a + a + a, a + a + b, a + a + c, a + b + b, a + c + c, b + b, b + b + b, b + b + c, c + c, and c + c + c, or any other ordering of a, b, and c).

No element, act, or instruction used herein should be construed as critical or essential unless explicitly described as such. Also, as used herein, the articles "a" and "an" are intended to include one or more items and may be used interchangeably with "one or more." Further, as used herein, the article "the" is intended to include one or more items referenced in connection with the article "the" and may be used interchangeably with "the one or more." Furthermore, as used herein, the terms "set" and "group" are intended to include one or more items and may be used interchangeably with "one or more." Where only one item is intended, the phrase "only one" or similar language is used. Also, as used herein, the terms "has," "have," "having," or the like are intended to be open-ended terms that do not limit an element that they modify (e.g., an element "having" A may also have B). Further, the phrase "based on" is intended to mean "based, at least in part, on" unless explicitly stated otherwise. Also, as used herein, the term "or" is intended to be inclusive when used in a series and may be used interchangeably with "and/or," unless explicitly stated otherwise (e.g., if used in combination with "either" or "only one of").

## Claims

1. An apparatus for wireless communication at a user equipment, UE (120), comprising:
a memory (282); and
one or more processors (280), coupled to the memory (282), configured to:
transmit (510) an uplink signal based at least in part on the uplink signal satisfying an enhanced effective isotropic radiated power, EIRP, threshold, which is an improved base compliance metric, associated with a spherical coverage requirement, the enhanced EIRP threshold being based at least in part on augmenting a base operating model associated with an absence of a blockage with a signal blockage model.

2. The apparatus of claim 1, wherein the uplink signal comprises a first uplink signal,
wherein the one or more processors, to transmit the uplink signal, are configured to:
transmit the first uplink signal in a presence of a signal blockage while satisfying the enhanced EIRP threshold; and
transmit a second uplink signal in the absence of the signal blockage while satisfying the enhanced EIRP threshold.

3. The apparatus of claim 1, wherein the signal blockage model is based at least in part on at least one of:
a one-handed signal blockage model,
a two-handed signal blockage model,
a partitioned signal blockage model that includes an air gap within the partitioned signal blockage model,
a hand phantom-based blockage model,
a loss distribution function that models an observed loss associated with a signal blockage, or
a spherical coverage distribution function that models transmission power distribution based at least in part on the signal blockage model.

4. The apparatus of claim 3, wherein the partitioned signal blockage model that includes the air gap comprises a hand blockage model that positions the air gap between two fingers of a hand.

5. The apparatus of claim 1, wherein the enhanced EIRP threshold is based at least in part on:
the UE being classified as a power class 1 device,
the UE being classified as a power class 2 device,
the UE being classified as a power class 3 device, or
the UE being classified as a power class 4 device.

6. The apparatus of claim 1, wherein the spherical coverage requirement associated with the enhanced EIRP threshold is based at least in part on a percentile point of radiated power distribution over a sphere centered on the UE.

7. The apparatus of claim 1, wherein the enhanced EIRP threshold is based at least in part on a network operator requirement.

8. The apparatus of claim 7, wherein the enhanced EIRP threshold associated with the network operator requirement is based at least in part on at least one of:
a first model based at least in part on the UE operating in an absence of a signal blockage,
a second model based at least in part on the UE operating adjacent to or beside a head blockage, or
a third model based at least in part on the UE operating adjacent to a hand blockage.

9. The apparatus of claim 8, wherein the enhanced EIRP threshold is based at least in part on a combination of the second model and the third model.

10. The apparatus of claim 1, wherein the one or more processors are further configured to:
receive a downlink signal based at least in part on satisfying an enhanced effective isotropic sensitivity, EIS, threshold that is based at least in part on augmenting the base operating model associated with the absence of the blockage with the signal blockage model.

11. A method of wireless communication performed by a user equipment, UE(120), comprising:
transmitting (510) an uplink signal based at least in part on the uplink signal satisfying an enhanced effective isotropic radiated power, EIRP, threshold, which is an improved base compliance metric, associated with a spherical coverage requirement, the enhanced EIRP threshold being based at least in part on augmenting a base operating model associated with an absence of a blockage with a signal blockage model.

12. The method of claim 11, wherein the uplink signal comprises a first uplink signal,
wherein transmitting the uplink signal comprises:
transmitting the first uplink signal in a presence of a signal blockage while satisfying the enhanced EIRP threshold; and
transmitting a second uplink signal in the absence of the signal blockage while satisfying the enhanced EIRP threshold.

13. The method of claim 12, wherein the signal blockage model is based at least in part on at least one of:
a one-handed signal blockage model,
a two-handed signal blockage model,
a partitioned signal blockage model that includes an air gap within the partitioned signal blockage model,
a hand phantom-based blockage model,
a loss distribution function that models an observed loss associated with a signal blockage, or
a spherical coverage distribution function that models transmission power distribution based at least in part on the signal blockage model.

14. The method of claim 13, wherein the enhanced EIRP threshold is based at least in part on:
the UE being classified as a power class 1 device,
the UE being classified as a power class 2 device,
the UE being classified as a power class 3 device, or
the UE being classified as a power class 4 device.

15. A non-transistory computer-readable medium storing a set of instructions, the set of instructions comprising:
one or more instructions that, when executed by one or more processors of a user equipment, UE (120), causes the UE (120) to:
transmit (510) an uplink signal based at least in part on the uplink signal satisfying an enhanced effective isotropic radiated power, EIRP, threshold, which is an improved base compliance metric, associated with a spherical coverage requirement, the enhanced EIRP threshold being based at least in part on augmenting a base operating model associated with an absence of a blockage with a signal blockage model.

## Patentansprüche

1. Eine Vorrichtung für eine drahtlose Kommunikation an einem Benutzergerät (User Equipment bzw. UE) (120), die Folgendes aufweist:
einen Speicher (282), und
einen oder mehrere Prozessoren (280), die mit dem Speicher (282) gekoppelt sind und konfiguriert sind zum:
Senden (510) eines Uplink-Signals basierend wenigstens teilweise darauf, dass das Uplink-Signal einen verbesserten Effektive-Isotropische-Strahlungsleistung (Effective Isotropic Radiated Power bzw. EIRP)-Schwellenwert, der eine verbesserte Basiseinhaltungsmetrik in Bezug auf eine Sphärische-Abdeckung-Anforderung ist, erfüllt, wobei der verbesserte EIRP-Schwellenwert wenigstens teilweise auf dem Augmentieren eines Basisbetriebsmodells, das mit der Abwesenheit einer Blockierung assoziiert ist, mit einem Signalblockierungsmodell basiert.

2. Vorrichtung nach Anspruch 1, wobei das Uplink-Signal ein erstes Uplink-Signal ist, wobei der eine oder die mehreren Prozessoren für das Senden des Uplink-Signals konfiguriert sind zum:
Senden des ersten Uplink-Signals in Anwesenheit einer Signalblockierung während einer Erfüllung des verbesserten EIRP-Schwellenwerts, und
Senden eines zweiten Uplink-Signals in Abwesenheit der Signalblockierung während einer Erfüllung des verbesserten EIRP-Schwellenwerts.

3. Vorrichtung nach Anspruch 1, wobei das Signalblockierungsmodell wenigstens teilweise auf wenigstens einem der Folgenden basiert:
einem einhändigen Signalblockierungsmodell,
einem zweihändigen Signalblockierungsmodell,
einem partitionierten Signalblockierungsmodell, das einen Luftspalt in dem partitionierten Signalblockierungsmodell enthält,
einem Handphantom-basierten Blockierungsmodell,
einer Verlustverteilungsfunktion, die einen beobachteten Verlust in Assoziation mit einer Signalblockierung modelliert, oder
einer Sphärische-Abdeckung-Verteilungsfunktion, die eine Sendeleistungsverteilung basierend wenigstens teilweise auf dem Signalblockierungsmodell modelliert.

4. Vorrichtung nach Anspruch 3, wobei das partitionierte Signalblockierungsmodell, das den Luftspalt enthält, ein Handblockierungsmodell, das den Luftspalt zwischen zwei Fingern einer Hand positioniert, ist.

5. Vorrichtung nach Anspruch 1, wobei der verbesserte EIRP-Schwellenwert wenigstens teilweise auf Folgendem basiert:
das UE ist als ein Gerät der Leistungsklasse 1 klassifiziert,
das UE ist als ein Gerät der Leistungsklasse 2 klassifiziert,
das UE ist als ein Gerät der Leistungsklasse 3 klassifiziert, oder
das UE ist als ein Gerät der Leistungsklasse 4 klassifiziert.

6. Vorrichtung nach Anspruch 1, wobei die mit dem verbesserten EIRP-Schwellenwert assoziierte Sphärische-Abdeckung-Anforderung wenigstens teilweise auf einem Prozentpunkt einer gestrahlten Leistungsverteilung über eine an dem UE zentrierte Sphäre basiert.

7. Vorrichtung nach Anspruch 1, wobei der verbesserte EIRP-Schwellenwert wenigstens teilweise auf einer Netzbetreiberanforderung basiert.

8. Vorrichtung nach Anspruch 7, wobei der mit der Netzbetreiberanforderung assoziierte verbesserte EIRP-Schwellenwert wenigstens teilweise auf wenigstens einem der Folgenden basiert:
einem ersten Modell, das wenigstens teilweise darauf basiert, dass das UE in Abwesenheit einer Signalblockierung betrieben wird,
einem zweiten Modell, das wenigstens teilweise darauf basiert, dass das UE in Nachbarschaft oder neben einer Kopfblockierung betrieben wird, oder
einem dritten Modell, das wenigstens teilweise darauf basiert, dass das UE in Nachbarschaft zu einer Handblockierung betrieben wird.

9. Vorrichtung nach Anspruch 8, wobei der verbesserte EIRP-Schwellenwert wenigstens teilweise auf einer Kombination aus dem zweiten Modell und dem dritten Modell basiert.

10. Vorrichtung nach Anspruch 1, wobei der eine oder die mehreren Prozessoren weiterhin konfiguriert sind zum:
Empfangen eines Downlink-Signals basierend wenigstens teilweise auf dem Erfüllen eines verbesserten Effektive-Isotropische-Empfindlichkeit (EIS)-Schwellenwerts, der wenigstens teilweise auf dem Augmentieren des Basisbetriebsmodells, das mit der Abwesenheit der Blockierung assoziiert ist, mit dem Signalblockierungsmodell basiert.

11. Ein Verfahren für eine drahtlose Kommunikation, das durch ein Benutzergerät (User Equipment bzw. UE) (120) durchgeführt wird, aufweisend:
Senden (510) eines Uplink-Signals basierend wenigstens teilweise darauf, dass das Uplink-Signal einen verbesserten Effektive-Isotropische-Strahlungsleistung (Effective Isotropic Radiated Power bzw. EIRP)-Schwellenwert, der eine verbesserte Basiseinhaltungsmetrik in Bezug auf eine Sphärische-Abdeckung-Anforderung ist, erfüllt, wobei der verbesserte EIRP-Schwellenwert wenigstens teilweise auf dem Augmentieren eines Basisbetriebsmodells, das mit der Abwesenheit einer Blockierung assoziiert ist, mit einem Signalblockierungsmodell basiert.

12. Verfahren nach Anspruch 11, wobei das Uplink-Signal ein erstes Uplink-Signal ist, wobei das Senden des Uplink-Signals aufweist:
Senden des ersten Uplink-Signals in Anwesenheit einer Signalblockierung während einer Erfüllung des verbesserten EIRP-Schwellenwerts, und
Senden eines zweiten Uplink-Signals in Abwesenheit der Signalblockierung während einer Erfüllung des verbesserten EIRP-Schwellenwerts.

13. Verfahren nach Anspruch 12, wobei das Signalblockierungsmodell wenigstens teilweise auf wenigstens einem der Folgenden basiert:
einem einhändigen Signalblockierungsmodell,
einem zweihändigen Signalblockierungsmodell,
einem partitionierten Signalblockierungsmodell, das einen Luftspalt in dem partitionierten Signalblockierungsmodell enthält,
einem Handphantom-basierten Blockierungsmodell,
einer Verlustverteilungsfunktion, die einen beobachteten Verlust in Assoziation mit einer Signalblockierung modelliert, oder
einer Sphärische-Abdeckung-Verteilungsfunktion, die eine Sendeleistungsverteilung basierend wenigstens teilweise auf dem Signalblockierungsmodell modelliert.

14. Verfahren nach Anspruch 13, wobei der verbesserte EIRP-Schwellenwert wenigstens teilweise auf Folgendem basiert:
das UE ist als ein Gerät der Leistungsklasse 1 klassifiziert,
das UE ist als ein Gerät der Leistungsklasse 2 klassifiziert,
das UE ist als ein Gerät der Leistungsklasse 3 klassifiziert, oder
das UE ist als ein Gerät der Leistungsklasse 4 klassifiziert.

15. Ein nicht-transitorisches, computerlesbares Medium, das einen Satz von Befehlen speichert, wobei der Satz von Befehlen Folgendes aufweist:
einen oder mehrere Befehle, die bei einer Ausführung durch einen oder mehrere Prozessoren eines Benutzergeräts (User Equipment bzw. UE) (120) das UE (120) veranlassen zum:
Senden (510) eines Uplink-Signals basierend wenigstens teilweise darauf, dass das Uplink-Signal einen verbesserten Effektive-Isotropische-Strahlungsleistung (Effective Isotropic Radiated Power bzw. EIRP)-Schwellenwert, der eine verbesserte Basiseinhaltungsmetrik in Bezug auf eine Sphärische-Abdeckung-Anforderung ist, erfüllt, wobei der verbesserte EIRP-Schwellenwert wenigstens teilweise auf dem Augmentieren eines Basisbetriebsmodells, das mit der Abwesenheit einer Blockierung assoziiert ist, mit einem Signalblockierungsmodell basiert.

## Revendications

1. Appareil de communication sans fil au niveau d'un équipement d'utilisateur, UE, (120), comprenant :
une mémoire (282) ; et
un ou plusieurs processeurs (280), couplés à la mémoire (282), configurés pour :
émettre (510) un signal en liaison montante sur la base, au moins en partie, du fait que le signal en liaison montante satisfait à un seuil de puissance isotrope rayonnée équivalente, EIRP, amélioré, qui est un indicateur métrique de conformité de base amélioré, associé à une exigence de couverture sphérique, le seuil EIRP amélioré étant basé, au moins en partie, sur l'augmentation d'un modèle de fonctionnement de base associé à une absence d'un blocage avec un modèle de blocage de signal.

2. Appareil selon la revendication 1, le signal en liaison montante comprenant un premier signal en liaison montante, les un ou plusieurs processeurs, pour émettre le signal en liaison montante, étant configurés pour :
émettre le premier signal en liaison montante en présence d'un blocage de signal tout en satisfaisant au seuil EIRP amélioré ; et
émettre un second signal en liaison montante en l'absence du blocage de signal tout en satisfaisant au seuil EIRP amélioré.

3. Appareil selon la revendication 1, le modèle de blocage de signal étant basé, au moins en partie, sur au moins un des modèles suivants :
un modèle de blocage de signal à une main,
un modèle de blocage de signal à deux mains,
un modèle de blocage de signal partitionné comprenant une lame d'air à l'intérieur du modèle de blocage de signal partitionné,
un modèle de blocage basé sur un fantôme de main,
une fonction de distribution des pertes qui modélise une perte observée associée à un blocage de signal, ou
une fonction de distribution de couverture sphérique qui modélise la distribution de puissance d'émission sur la base, au moins en partie, du modèle de blocage de signal.

4. Appareil selon la revendication 3, le modèle de blocage de signal partitionné qui comprend la lame d'air comprenant un modèle de blocage par la main qui positionne la lame d'air entre deux doigts d'une main.

5. Appareil selon la revendication 1, le seuil EIRP amélioré étant basé, au moins en partie, sur :
le fait que l'UE est classé comme dispositif de classe de puissance 1,
le fait que l'UE est classé comme dispositif de classe de puissance 2,
le fait que l'UE est classé comme dispositif de classe de puissance 3, ou
le fait que l'UE est classé comme dispositif de classe de puissance 4.

6. Appareil selon la revendication 1, l'exigence de couverture sphérique associée au seuil EIRP amélioré étant basée, au moins en partie, sur un point centile d'une distribution de puissance rayonnée sur une sphère centrée sur l'UE.

7. Appareil selon la revendication 1, le seuil EIRP amélioré étant basé, au moins en partie, sur une exigence d'opérateur de réseau.

8. Appareil selon la revendication 7, le seuil EIRP amélioré associé à l'exigence d'opérateur de réseau étant basé, au moins en partie, sur au moins un des modèles suivants :
un premier modèle basé, au moins en partie, sur le fait que l'UE fonctionne en l'absence d'un blocage de signal,
un deuxième modèle basé, au moins en partie, sur le fait que l'UE fonctionne adjacent ou à côté d'un blocage par la tête, ou
un troisième modèle basé, au moins en partie, sur le fait que l'UE fonctionne adjacent à un blocage par la main.

9. Appareil selon la revendication 8, le seuil EIRP amélioré étant basé, au moins en partie, sur une combinaison du deuxième modèle et du troisième modèle.

10. Appareil selon la revendication 1, les un ou plusieurs processeurs étant en outre configurés pour :
recevoir un signal en liaison descendante sur la base, au moins en partie, du fait de satisfaire à un seuil de sensibilité isotrope efficace, EIS, amélioré qui est basé, au moins en partie, sur l'augmentation du modèle de fonctionnement de base associé à l'absence du blocage avec le modèle de blocage de signal.

11. Procédé de communication sans fil réalisé par un équipement d'utilisateur, UE, (120), comprenant l'étape consistant à :
émettre (510) un signal en liaison montante sur la base, au moins en partie, du fait que le signal en liaison montante satisfait à un seuil de puissance isotrope rayonnée équivalente, EIRP, amélioré, qui est un indicateur métrique de conformité de base amélioré, associé à une exigence de couverture sphérique, le seuil EIRP amélioré étant basé, au moins en partie, sur l'augmentation d'un modèle de fonctionnement de base associé à une absence d'un blocage avec un modèle de blocage de signal.

12. Procédé selon la revendication 11, le signal en liaison montante comprenant un premier signal en liaison montante, l'émission du signal en liaison montante comprenant les étapes consistant à :
émettre le premier signal en liaison montante en présence d'un blocage de signal tout en satisfaisant au seuil EIRP amélioré ; et
émettre un second signal en liaison montante en l'absence du blocage de signal tout en satisfaisant au seuil EIRP amélioré.

13. Procédé selon la revendication 12, le modèle de blocage de signal étant basé, au moins en partie, sur au moins un des modèles suivants :
un modèle de blocage de signal à une main,
un modèle de blocage de signal à deux mains,
un modèle de blocage de signal partitionné comprenant une lame d'air à l'intérieur du modèle de blocage de signal partitionné,
un modèle de blocage basé sur un fantôme de main,
une fonction de distribution des pertes qui modélise une perte observée associée à un blocage de signal, ou
une fonction de distribution de couverture sphérique qui modélise la distribution de puissance d'émission sur la base, au moins en partie, du modèle de blocage de signal.

14. Procédé selon la revendication 13, le seuil EIRP amélioré étant basé, au moins en partie, sur :
le fait que l'UE est classé comme dispositif de classe de puissance 1,
le fait que l'UE est classé comme dispositif de classe de puissance 2,
le fait que l'UE est classé comme dispositif de classe de puissance 3, ou
le fait que l'UE est classé comme dispositif de classe de puissance 4.

15. Support non transitoire lisible par ordinateur, stockant un ensemble d'instructions, l'ensemble d'instructions comprenant :
une ou plusieurs instructions qui, lorsqu'elles sont exécutées par un ou plusieurs processeurs d'un équipement d'utilisateur, UE, (120), amènent l'UE (120) à :
émettre (510) un signal en liaison montante sur la base, au moins en partie, du fait que le signal en liaison montante satisfait à un seuil de puissance isotrope rayonnée équivalente, EIRP, amélioré, qui est un indicateur métrique de conformité de base amélioré, associé à une exigence de couverture sphérique, le seuil EIRP amélioré étant basé, au moins en partie, sur l'augmentation d'un modèle de fonctionnement de base associé à une absence d'un blocage avec un modèle de blocage de signal.
